(19)

Europäisches
Patentamt
European
Patent Office
Office européen
des brevets

(11)  **EP 4 455 658 A1**

(12)  **EUROPEAN PATENT APPLICATION**
published in accordance with Art. 153(4) EPC

(43) Date of publication:
**30.10.2024  Bulletin 2024/44**

(21) Application number: **22910966.5**

(22) Date of filing: **09.12.2022**

(51) International Patent Classification (IPC):
*G01N 29/12* (2006.01)      *G01N 25/18* (2006.01)
*G01N 29/04* (2006.01)      *G01N 29/44* (2006.01)

(52) Cooperative Patent Classification (CPC):
**G01N 25/18; G01N 29/04; G01N 29/12;
G01N 29/44**

(86) International application number:
**PCT/JP2022/045549**

(87) International publication number:
**WO 2023/120256 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **24.12.2021  JP 2021210611**

(71) Applicant: **Teijin Limited
Osaka 530-0005 (JP)**

(72) Inventors:
• **TANIGAMI Kaori
Osaka-shi, Osaka 530-0005 (JP)**
• **MINEO Chio
Osaka-shi, Osaka 530-0005 (JP)**
• **OHKI Takeru
Osaka-shi, Osaka 530-0005 (JP)**

(74) Representative: **Hoffmann Eitle
Patent- und Rechtsanwälte PartmbB
Arabellastraße 30
81925 München (DE)**

(54)  **MOLDED BODY REGION INSPECTION PROGRAM, MOLDED BODY REGION INSPECTION METHOD, MOLDED BODY REGION INSPECTION DEVICE, AND RECORDING MEDIUM**

(57)     An inspection device (1) is provided with a storage unit (14) for storing a mechanical property inference model generated by machine learning based on mechanical property information and nondestructive inspection information of a first molded body region which is reinforced with reinforcing fibers and of which the mechanical property information and nondestructive inspection information are known, the mechanical property inference model taking nondestructive inspection information of a second molded body region, which is reinforced with reinforcing fibers and of which mechanical property information is unknown, as an input and inferring the mechanical property information of the second molded body region; wherein the inspection device (1) acquires the nondestructive inspection information of the second molded body region, inputs the nondestructive inspection information into the mechanical property inference model, acquires the mechanical property information of the second molded body region from the mechanical property inference model, and performs output based on the mechanical property information.

FIG.1

**Description**

TECHNICAL FIELD

The present invention relates to an inspection program, an inspection method, an inspection device for a fiber-reinforced molded body region, and a recording medium.

BACKGROUND

In the molded body reinforced with the carbon fibers, the brittleness of the matrix resin can be reinforced with the fibers having high strength. Therefore, the material is widely used as a material excellent in weight and high mechanical properties.
Conventionally, in a production process of a fiber reinforced composite material, ultrasonic inspection for inspecting a defective product at the time of manufacturing the composite material is performed. For example, in Patent Literature 1, the following inspection is performed in a step of impregnating the carbon fiber with the thermoplastic resin. First, an ultrasonic wave transmitter and a wave receiver having directivity are opposed to each other at a constant distance from an object to be inspected (a composite material in which carbon fibers are impregnated with a thermoplastic resin). Then, ultrasonic waves are emitted from one ultrasonic wave transmitter, the ultrasonic waves are received by the wave receiver opposed to the object to be inspected, and a propagation time of the ultrasonic waves is measured by a signal processing circuit, thereby internal defects of the object to be inspected are detected in a non-contact manner. The data of the inspection using the ultrasonic wave here is converted into an image, so that the acceptance or rejection determination of the inspection target can be performed based on the image.
Patent Literatures 2 and 3 disclose an apparatus for automatically performing a highly accurate search in order to efficiently sort out a blood tone, a feather, or the like in a process of producing a processed food.

CITATION LIST

PATENT LITERATURE

Patent Literature 1: JP-A-2019-158459
Patent Literature 2: WO2019/151393
Patent Literature 3: WO2019/151394

SUMMARY

TECHNICAL PROBLEM

In recent years, there has been a problem of suppressing production costs while maintaining high quality because of soaring raw material prices and labor costs, and it is required to realize a low-cost and highly accurate inspection for a molded body region that is a region obtained by molding a fiber-reinforced composite material in a mold. The sorting operation of the composite material by the ultrasonic inspection described in Patent Literature 1 depends on a visual inspection of the obtained image. Therefore, it is difficult to grasp the state of the composite material in detail. In particular, it is difficult to provide an objective evaluation criterion in the acceptance/rejection determination performed by visually checking an image, and it is difficult to determine what is used to calculate the acceptance/rejection criterion of the material.
Further, the food inspection system described in Patent Literatures 2 and 3 is a device for a human to search for a position of a hard bone, and is different from a technique for inspecting a molded body. This food inspection system merely uses a neural network instead of humans who can determine an image or a quality of a measurement target by looking them.
An object of the present invention is to provide an inspection program, an inspection method, an inspection apparatus, and a recording medium for a molded body region which can infer mechanical properties of a molded body region obtained by molding a composite material with a mold without measuring mechanical properties and can be used for evaluation of the molded body region.

SOLUTION TO PROBLEM

The above object can be solved by the following aspects.

A program for inspecting a molded body region according to an aspect of the present invention is a program for inspecting a molded body region, the program causing a processor to execute steps of:

generating a mechanical property inference model for inferring unknown mechanical property information of a fiber-reinforced second molded body region using non-destructive inspection information of the second molded body region as input by performing machine learning of known mechanical property information and known non-destructive inspection information of a fiber-reinforced first molded body region;
acquiring the non-destructive inspection information of the second molded body region;
inputting the acquired non-destructive inspection information into the mechanical property inference model;
acquiring mechanical property information of the second molded body region from the mechanical property inference model; and
performing output based on the mechanical property information,
wherein the first molded body region and the second molded body region are each obtained by molding a plate-shaped composite material with a mold,
the first molded body region and the second molded body region being molded such that a charge ratio of each of the first molded body region and the second molded body region is 10% or more and 500% or less, the charge ratio being a value obtained by calculating (S1/S2) × 100, in which S1 is a projected area of the composite material, and S2 is a projected area of the portions corresponding to each of the first molded body region and the second molded body region in the mold cavity of the mold.

Here, the non-destructive inspection information is vibration characteristic information or acoustic characteristic information, and a sampling frequency at the time of acquiring the non-destructive inspection information is more than 0 Hz.

A method for inspecting a molded body region according to an aspect of the present invention includes the steps of:

generating a mechanical property inference model for inferring unknown mechanical property information of a fiber-reinforced second molded body region using non-destructive inspection information of the second molded body region as input by performing machine learning of known mechanical property information and known non-destructive inspection information of a fiber-reinforced first molded body region;
acquiring the non-destructive inspection information of the second molded body region;
inputting the acquired non-destructive inspection information into the mechanical property inference model;
acquiring mechanical property information of the second molded body region from the mechanical property inference model; and performing output based on the mechanical property information,
wherein the first molded body region and the second molded body region are each obtained by molding a plate-shaped composite material with a mold,
the first molded body region and the second molded body region being molded such that a charge ratio of each of the first molded body region and the second molded body region is 10% or more and 500% or less, the charge ratio being a value obtained by calculating (S1/S2) × 100, in which S1 is a projected area of the composite material, and S2 is a projected area of the portions corresponding to each of the first molded body region and the second molded body region in the mold cavity of the mold. Here, the non-destructive inspection information is vibration characteristic information or acoustic characteristic information, and a sampling frequency at the time of acquiring the non-destructive inspection information is more than 0 Hz.

An inspection device for a molded body region of one embodiment of the present invention includes a processor configured to access a model storage unit that stores a mechanical property inferring model generated by machine learning based on mechanical property information and non-destructive inspection information of a fiber-reinforced first molded body region,

wherein the mechanical property inference model infers unknown mechanical property information of a fiber-reinforced second molded body region by inputting non-destructive inspection information of the second molded body region,
wherein the first molded body region and the second molded body region are each obtained by molding a plate-shaped composite material with a mold,
the first molded body region and the second molded body region are obtained by molding the composite material such that a charge ratio is 10% or more and 500% or less, respectively,

wherein the charge ratio is a value obtained by calculating (S1/S2) × 100, wherein
S1 is a projected area of the composite material, and

S2 is a projected area of a portion corresponding to the first molded body region and the second molded body region in a mold cavity of the mold,
the processor is configured to:

acquire the non-destructive inspection information of the second molded body region;
input the non-destructive inspection information to the mechanical property inference model;
acquire mechanical property information of the second molded body region from the mechanical property inference model; and
output the mechanical property information based on the mechanical property information. Here, the non-destructive inspection information is vibration characteristic information or acoustic characteristic information, and a sampling frequency at the time of acquiring the non-destructive inspection information is more than 0 Hz.

A program for inspecting a molded body region according to an aspect of the present invention is a program for inspecting a molded body region, the program causing a processor to execute steps of:

generating a mechanical property inference model for inferring unknown mechanical property information of a fiber-reinforced second molded body region using non-destructive inspection information of the second molded body region as input by performing machine learning of known mechanical property information and known non-destructive inspection information of a fiber-reinforced first molded body region;
acquiring the temperature distribution information of the second molded body region;
inputting the acquired temperature distribution information to the mechanical property inference model;
acquiring mechanical property information of the second molded body region from the mechanical property inference model; and
outputting the mechanical property information based on the mechanical property information,
wherein the first molded body region and the second molded body region are each obtained by molding a plate-shaped composite material with a mold,
the first molded body region and the second molded body region being molded such that a charge ratio of each of the first molded body region and the second molded body region is 10% or more and 500% or less, the charge ratio being a value obtained by calculating (S1/S2) × 100, in which S1 is a projected area of the composite material, and S2 is a projected area of the portions corresponding to each of the first molded body region and the second molded body region in the mold cavity of the mold.

[ADVANTAGEOUS EFFECT OF THE INVENTION]

According to the present invention, it is possible to infer the mechanical properties of the molded body region only by the non-destructive inspection information without measuring the mechanical properties and to use the inferred mechanical properties for the evaluation of the molded body region. According to the present invention, it is possible to instantaneously infer, with high accuracy, mechanical property information that cannot be inferred by a person with any effort from the non-destructive inspection information. Accordingly, waste loss in production of the molded body including the molded body region can be reduced, and a high-quality molded body can be provided at a low cost.

BRIEF EXPLANATION OF THE DRAWINGS

FIG. 1 is a block diagram showing a configuration example of an inspection apparatus.
FIG. 2 is a flowchart of the training process.
FIG. 3 is a diagram showing an example of a neural network that outputs three reaction values.
FIG. 4 is a diagram showing arithmetic processing between units of a neural network.
FIG. 5 is a flowchart of inference processing.
Fig. 6 is a distribution of a discrimination curved surface and reaction value when RBF is used for the activation function.
Fig. 7 is the distribution of the discrimination curved surface and reaction value when a sigmoid function is used for the activation function.
FIG. 8A is a diagram showing a vibration inspection image.

FIG. 8B is a diagram showing a vibration inspection image.

FIG. 8C is a diagram showing a vibration inspection image.

FIG. 8D is a diagram showing a vibration inspection image.

FIG. 9 is a side view schematically showing an example of a mold used for press molding of the composite material MX.

FIG. 10 is a schematic plan view of a fixed mold in the mold shown in FIG. 9 viewed from the movable mold side.

FIG. 11 is a schematic diagram showing an example of a method of molding a single composite material M by the mold shown in FIG. 9.

FIG. 12 is a schematic plan view of the fixed mold and the composite material M shown in FIG. 11 viewed in the direction D1.

FIG. 13 is a schematic diagram showing a state in which the composite material M is molded by the mold shown in FIG. 9.

FIG. 14 is a schematic diagram showing an example in which the composite material M is heated, preformed and then placed in a fixed mold.

FIG. 15 is a schematic diagram showing an example in which a plurality of preformed plate-shaped composite materials are arranged on a fixed mold so as not to overlap each other and then molded.

FIG. 16 is a schematic diagram showing a state in which the composite material is molded from the state in FIG. 15.

FIG. 17 is a schematic diagram for explaining a relationship between a charge rate and a flowing distance of a composite material.

FIG. 18A is a diagram showing a temperature distribution image (active thermographic image).

FIG. 18B is a schematic diagram showing a temperature distribution image (active thermographic image).

DESCRIPTION OF EMBODIMENTS

An inspection system including an inspection device according to an embodiment of the present invention will be described below, but the present invention is not limited thereto. [Overview of Inspection System] In the inspection system of the present embodiment, a fiber-reinforced molded body region (second molded body region) having a predetermined shape (for example, a plate-shaped) and unknown mechanical property information is used as an inspection target, and the mechanical property information of the second molded body region is inferred without actually measuring. Here, the molded body region is a region obtained by molding a composite material containing reinforcing fibers in a mold.

The mechanical property information of the molded body region is information indicating the mechanical property of the molded body region, and is, for example, information regarding fracture or elasticity such as strength of the molded body region. Examples of the mechanical property information include information on a fracture strength such as a tensile strength or a flexural strength, and information on an elastic modulus related to each of a fracture strength, a compression strength, and a shear strength.

The information on the elastic modulus may be an elastic modulus (for example, a tensile elastic modulus or a flexural modulus) itself, or may be a rank (hereinafter, referred to as a mechanical property rank) when the elastic modulus (for example, a tensile elastic modulus or a flexural modulus) is ranked. The information on the elastic modulus may further include any of information indicating that the elastic modulus (or the rank thereof) corresponds to a defective product, information indicating that the elastic modulus (or the rank thereof) corresponds to a good product, and information indicating that the elastic modulus (or the rank thereof) was difficult to guess.

The information on the fracture strength may be the fracture strength (for example, tensile strength or yield strength) itself, or may be the rank (hereinafter, referred to as mechanical property rank) when the fracture strength (for example, tensile strength or yield strength) is ranked. The information on the fracture strength may further include any of information indicating that the fracture strength (or the rank thereof) corresponds to a defective product, information indicating that the fracture strength (or the rank thereof) corresponds to a non-defective product, and information indicating that the fracture strength (or the rank thereof) was difficult to infer.

A computer included in the inspection system acquires the non-destructive inspection information of the second molded body region, inputs the non-destructive inspection information to the mechanical property inference model previously generated and stored in the model storage unit, performs inference by the mechanical property inference model, and outputs the inferred mechanical property information of the second molded body region or the information that mechanical property information is difficult to infer. Examples of the inferred mechanical property information of the second molded body region include a mechanical property rank, information indicating that the molded body region is a good product or a defective product, and the like. Examples of a method of outputting information include displaying information on a display unit, speaking the information from a speaker as a message, and causing a printer to print the information.

In the present invention, the non-destructive inspection information is, for example, vibration characteristic information or temperature distribution information.

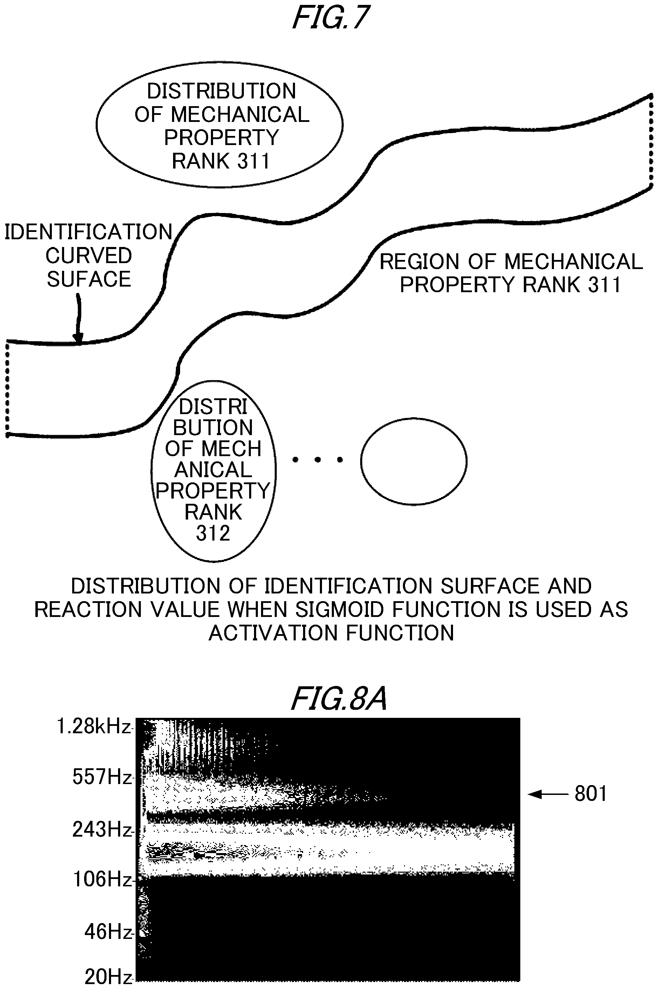

The vibration characteristic is information of the molded body region itself such as displacement, acceleration, and natural frequency obtained by vibrating the molded body region in a fixed state or a non-fixed state. The vibration characteristic information may be numerical data such as a natural frequency, or may be a vibration inspection image or an acoustic characteristic image using a wavelet image. Examples of the vibration inspection image include the wavelet images in FIGS. 8A to 8D. Here, the wavelet image is a two-dimensional image in which, after wavelet conversion is performed on the vibration in the molded body region, a frequency of the vibration is indicated by a vertical axis, a time is indicated by a horizontal axis, and an amplitude of the vibration is indicated by a gray level.

The temperature distribution information is information indicating a temperature distribution of the molded body region to be inspected. As the temperature distribution information, for example, an image (thermography) obtained by imaging a molded body region with an infrared camera can be used.

The mechanical property inference model is a model that outputs the mechanical property information using the non-destructive inspection information as an input. The model is generated by machine learning (including supervised learning or deep learning without teaching) of known mechanical property information and known non-destructive inspection information of the fiber reinforced molded body region (first molded body region). As the mechanical property inference model, for example, a neural network or a support vector machine is used.

A computer of the inspection system constitutes an inspection device. The computer may include a processor, a storage unit including a device capable of storing data such as a hard disk device or an SSD (Solid State Drive), and RAMs (Random Access Memory) and ROMs (Read Only Memory). The processor executes an inspection program stored in the ROM to perform processing such as acquisition of non-destructive inspection information of a molded body region of an inspection target, input of the acquired non-destructive inspection information to a mechanical property inference model, acquisition of mechanical property information from the mechanical property inference model, and output based on the acquired mechanical property information. A storage medium for storing the test program is not limited to a ROM, and a known storage medium can be used, but a non-transitory storage medium is preferably used, and a hard disk device or an SSD (Solid State Drive) may be used. The storage medium may be referred to as a recording medium. Further, the inspection program may be stored in a server (cloud) on a network, and the processor may download the program from the server and execute the program.

The non-destructive inspection information of the molded body region is usually used to determine whether or not a defect, a gap, or a foreign substance is present in the molded body region, or how much is present when the defect, gap, or foreign substance is present in the molded body region. However, even if there are many defects, voids, or foreign matters in the molded body region, mechanical properties may be good depending on a distribution state of the defects, voids, or foreign matters. In such a case, if the non-destructive inspection information is visually confirmed and it is determined that the product is a defective product because of a large number of defects, gaps, or foreign matters, the molded body region that should have been non-defective is discarded, and the production efficiency is lowered. On the other hand, the reverse may also be satisfied. That is, even if the non-destructive inspection information is visually confirmed and it is determined that the defect, the gap, or the foreign substance is small, the mechanical properties may be in a state corresponding to a defective product.

The present inventors have found that there is a correlation between the non-destructive inspection information and the mechanical property information as a result of verification based on the above viewpoint. The present inventors have succeeded in inferring the mechanical property information in the molded body region with high accuracy from the non-destructive inspection information in the molded body region by causing a model such as a neural network or a support vector machine to machine-learn a large number of actually measured data of the non-destructive inspection information and the mechanical property information. It has not been conventionally considered to obtain mechanical property information from non-destructive inspection information. Therefore, it was not easy for a person skilled in the art to construct a machine learning model that outputs machine physical property information using non-destructive inspection information as an input.

Hereinafter, a detailed example of the inspection system will be described. In the following, an example in which the mechanical property inference model is a neural network will be described.

[Reinforcing fiber]

The type of reinforcing fibers used in the present invention can be appropriately selected according to the use or the like of a molded body region (a) (corresponding to a second molded body region whose mechanical property information is unknown) which is an object to be inspected, and is not particularly limited. The reinforcing fibers can be preferably any of inorganic fibers and organic fibers.

Examples of the inorganic fibers include carbon fibers, activated carbon fibers, graphite fibers, glass fibers, tungsten carbide fibers, silicon carbide fibers, ceramic fibers, alumina fibers, natural mineral fibers (basalt fibers, and the like), boron fibers, boron nitride fibers, boron carbide fibers, and metal fibers.

[Carbon fiber]

As carbon fibers, polyacrylonitrile (PAN)-based carbon fibers, petroleum/coal pitch-based carbon fibers, rayon carbon fibers, cellulose carbon fibers, lignin carbon fibers, phenolic carbon fibers, vapor grown carbon fibers, and the like are known. When carbon fibers are used as fibers in the present invention, any of these carbon fibers can be suitably used.

[Form of reinforcing fibers]

There is no particular limitation on the form of the reinforcing fibers in the present invention, but a continuous fiber used by the present inventors as a specific example will be described below. However, the present invention is not limited to the continuous fibers.
The continuous fibers mean reinforcing fibers in which reinforcing fiber bundles are aligned in a continuous state without cutting reinforcing fibers into a short fiber state. For the purpose of obtaining the molded body region (a) having excellent mechanical properties, it is preferable to use continuous reinforcing fibers. More specifically, the continuous fibers are fibers having a length of 1 m or more. After processing the continuous fibers into a woven fabric such as textiles or knittings, the continuous fibers are impregnated with resin by hand lay-up and used, or the continuous fibers are used as a prepreg obtained by impregnating the continuous fibers with an uncured resin.

[Molded body region (a)]

The molded body region (a) is reinforced with reinforcing fibers. Hereinafter, an example of an embodiment performed by the present inventors will be described, but the present invention is not limited to the molded body region (a) described below.

1. Molded body

The molded body region (a) is a molded body after molding the plate-shaped composite material, and may be a molded body using a thermoplastic resin or a molded body using a thermosetting prepreg.
The prepreg is a material for producing a molded body. The prepreg is a molding intermediate material in which: a substrate made of carbon fibers such as continuous carbon fibers arranged in one direction and formed into a sheet shape (unidirectional prepreg) or a carbon fiber woven fabric is impregnated with a thermosetting resin; or a substrate part of which is impregnated with a thermosetting resin and a remaining part of the substrate is disposed on at least one surface.

2. Unidirectional material

The molded body region (a) is preferably a unidirectional material. The unidirectional material refers to one in which continuous reinforcing fibers having a length of 100 mm or more are arranged in one direction inside the molded body region (a). The unidirectional material may be a laminate of a plurality of continuous reinforcing fibers. In particular, in the case where the molded body region (a) is a unidirectional material and the molded body uses a thermosetting prepreg, fiber orientation has little influence on mechanical properties. Therefore, it is possible to improve the accuracy of inference of mechanical property information by a model to be described later.

[Preferred molded body region]

It is preferable that the molded body region contains reinforcing fibers and a matrix resin as essential components, and contains other components as optional components, and a porosity Vr of a molded body region obtained by the following formulae (A) and (B) is 10% or less.

$$Vr = (t2-t1)/t2 \times 100 \quad \text{Formula (A)}$$

$$t1 = (Wf/Df + Wm/Dm + Wz/Dz) \div \text{unit area (mm}^2) \quad \text{Formula (B)}$$

t1: Theoretical thickness (mm) of molded body region
t2: Actual measured thickness (mm) of molded body region

Df: Density of reinforcing fibers (mg/mm$^3$)
Dm: Density of matrix resin (mg/mm$^3$)
Dz: Density of other components (mg/mm$^3$)
Wf: mass (mg) of reinforcing fibers
Wm: mass (mg) of matrix resin
Wz: mass (mg) of other components

The porosity Vr is more preferably 5% or less, still more preferably 3% or less. When the porosity is within this range, the accuracy of estimating the mechanical properties of the present invention is improved.

[Production of Molded Body Region (a)]

For example, the molded body region (a) can be prepared as follows.

1. Material

- Reinforcing fibers: carbon fibers "Tenax" (registered trademark) "STS40-24K (tensile strength: 4,300 MPa, tensile elastic modulus: 240 GPa, number of filaments: 24,000, fineness: 1,600 tex, elongation: 1.8%, density: 1.78 g/cm$^3$, manufactured by TEIJIN LIMITED)
- Base material resin: thermosetting resin composition containing epoxy resin as a main component

2. Preparation of unidirectional prepreg

The unidirectional prepreg was produced by a hot melt method as follows. First, the thermosetting resin composition was coated on a mold release paper using a coater to produce a resin film. Next, the carbon fiber bundles were sent out from a creel, passed through a comb, and the pitches between the carbon fiber bundles were aligned, and then widened through a fiber opening bar, and aligned in one direction so that the mass of the fibers per unit area (fiber basis weight) was 100 g/m$^2$ in the form of a sheet. After that, the resin films were overlapped on both surfaces of the carbon fibers, heated and pressed to impregnate the carbon fibers with the thermosetting resin composition, and wound up in a winder to produce a unidirectional prepreg. The obtained unidirectional prepreg had a resin content of 30 wt. %.

3. Preparation of molded body region (a)

Eleven sheets of the unidirectional prepregs were manually laminated in a 0°-direction to obtain a prepreg laminate having a laminated structure [011]$_T$. The prepreg laminate was placed in a bag film, the bag film was placed in a mold, the mold was heated in an autoclave at 130° C. for 120 minutes, and the prepreg laminate was cured to produce a CFRP molded body (molded body region (a) which is a unidirectional carbon fiber reinforced thermosetting resin molded body) having a thickness of 1 mm. The charge ratio described below during autoclave molding was 100%.

[Measurement of tensile elastic modulus and tensile strength]

As a specific example of the fracture strength or the elastic modulus of the present invention, the present inventors measured the tensile elastic modulus and the tensile strength of the molded body region (a) as described below.
The CFRP molded body was processed into a test piece shape (length 250 mm × width 15 mm) by a water jet, and tabs made of a glass fiber reinforced resin matrix composite material were adhered. In accordance with ASTM D3039 method, a 0°-direction tensile test was performed using a universal testing machine under the condition of a test speed of 2 mm/min to calculate the tensile elastic modulus and tensile strength of the CFRP molded body (molded body region (a)).

[Vibration characteristic information]

In the present invention, it is preferable that the non-destructive inspection information is vibration characteristic information. A vibration inspection method used for acquiring the vibration characteristic information is not particularly limited, and any inspection method may be used as long as the vibration inspection method detects an internal defect, a gap, or a foreign substance in a molded body region without destroying the molded body region. A finite element method (FEA) may be used for acquiring the vibration characteristic information. It is preferable that the vibration characteristic information is obtained by converting information obtained by the vibration inspection or the finite element method into an image, and it is particularly preferable that the converted image is a wavelet image.

Specific wavelet images are shown in FIGS. 8A to 8D. When acquiring this image, vibration measurement was performed by impulse excitation under a free-free boundary condition. A hole of Φ2 mm was formed in the molded body, and a free-free boundary condition was established by passing nylon strings (22-8231 manufactured by Takagi Kogyo Co., Ltd.) through the hole and suspending the molded body from the beam. An acceleration pickup sensor (356A01 manufactured by PCB PIEZOTRONICS, Inc) was placed on the molded body region, and the molded body region was vibrated using an impulse hammer (GK-3100 manufactured by Ono Meter Co., Ltd.). A real-time acoustic vibration analysis system (DS-3000 manufactured by Ono Meter Co., Ltd.) was used for the data measurement and analysis. At this time, the sampling frequency was 2000 Hz.

The obtained vibration data was analyzed using wavelet analysis software (BIOMAS manufactured by ELMEC Co., Ltd.) to obtain a wavelet image in which a frequency of vibration was indicated by a vertical axis, a time was indicated by a horizontal axis, and an amplitude of vibration was indicated by luminance or hue.

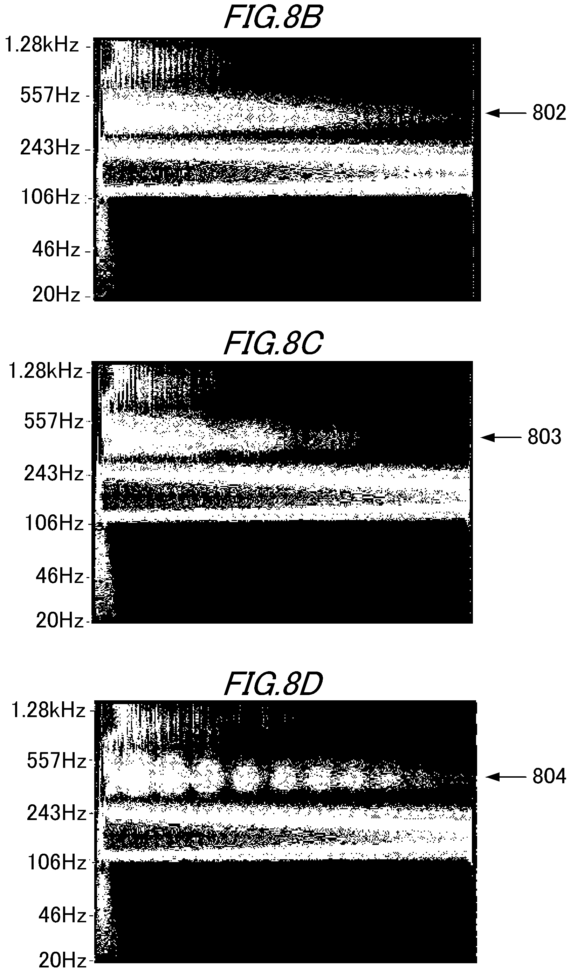

FIGS. 8A and 8B are wavelet images of defect-free molded body regions, and FIGS. 8C and 8D are wavelet images of defective molded body regions. FIGS. 8A to 8D are binarized images, and show that the larger the white portion, the larger the amplitude of vibration at that frequency. Reference sign 803 in FIG. 8C and reference sign 804 in FIG. 8D have a spherical shape, and it is understood that vibration at 450 Hz was intermittently generated. It was confirmed that portions of reference sign 803 in FIG. 8C and reference sign 804 in FIG. 8D are clearly different from portions of reference sign 801 in FIG. 8A and reference sign 802 in FIG. 8B.

[Vibration damping of vibration characteristic]

It is preferable that the image includes information of vibration damping. Vibration damping is a vibration phenomenon in which amplitude decreases with time in time history data of vibration. For example, when the pattern indicated by reference sign 801 in FIG. 8A and the pattern indicated by reference sign 802 in FIG. 8B are viewed, it can be seen that the length of the white pattern at about 450 Hz in FIGS. 8A and 8B in the vertical axis direction decreases with time, and the vibration of about 450 Hz is attenuated. At this time, at reference sign 801 in FIG. 8A, the speed at which vibration of about 450 Hz is attenuated is higher than that at reference sign 802 in FIG. 8B. In the molded body region in which the measurement data of FIGS. 8A to 8D were measured, the tensile elastic modulus and tensile strength were smaller as the speed at which the vibration at about 450 Hz was attenuated was faster. FIGS. 8A to 8D are merely examples. A frequency at which vibration damping occurs varies depending on a shape and a natural frequency of the test piece. Further, the mechanical properties other than the tensile elastic modulus and the tensile strength are not necessarily so small that the speed at which the vibration is attenuated is high.

[Acoustic Property]

The non-destructive inspection information in the present invention may be acoustic characteristic information.

[Frequency]

1. Sampling frequency

In general, the sampling frequency refers to the frequency with which a sample is taken per unit time in sampling, which is a process required for converting an analog waveform such as audio into digital data. In order to correctly sample a certain waveform, it is necessary to sample at a frequency twice or more the bandwidth of the frequency component of the waveform. In the present invention, the non-destructive inspection information is vibration characteristic information or acoustic characteristic information, and a sampling frequency at the time of acquiring the non-destructive inspection information in the second molded body region is more than 0 Hz.

The lower limit is preferably 50 Hz or higher, more preferably 250 Hz or higher, still more preferably 5,000 Hz or higher, and even more preferably 10,000 Hz or higher. On the other hand, the upper limit is preferably 50,000 Hz or less, more preferably 40,000 Hz or less, and still more preferably 30,000 Hz or less.

Therefore, the sampling frequency is preferably 50 Hz or more and 50,000 Hz or less, more preferably 250 Hz or more and 50,000 Hz or less, still more preferably 5,000 Hz or more and 40,000 Hz or less, and yet still more preferably 10,000 Hz or more and 30,000 Hz or less.

From another viewpoint, the sampling frequency is preferably twice or more the above-described vibration damping occurs.

From another viewpoint, the sampling frequency at the time of acquiring the vibration characteristics of the second molded body region is preferably twice or more the natural frequency of the primary mode, which will be described later, and more preferably twice or more the natural frequency of the secondary mode.

2. Natural frequency of primary mode

When the non-destructive inspection information is the vibration characteristic information, the natural frequencies of the primary modes in the first molded body region and the second molded body region are preferably between more than 0 Hz and 1000 Hz or less. Within this range, for example, when the molded body is assembled to an automobile, comfort is enhanced without resonance with vibrations from the outside or from the engine compartment. The natural frequencies of the primary mode in the first molded body region and the second molded body region are more preferably more than 0 Hz and 500 Hz or less.

On the other hand, when the non-destructive inspection information is the acoustic property information, the natural frequencies of the primary modes in the first molded body region and the second molded body region are preferably more than 0 Hz and 20,000 Hz or less, and more preferably more than 0 Hz and 10,000 Hz or less.

[Finite Element Method]

The mechanical property information or the non-destructive inspection information of the first molded body region is preferably obtained by a finite element method. Here, the finite element method (Finite Element Method, FEM) is one of numerical analysis methods, which allows to numerically obtain approximate solutions to differential equations that are difficult to solve analytically. By producing an analysis model in which material parameters identified by comparison between actual measurement and analysis are applied to the shape of the first molded body region in advance, information of mechanical properties or non-destructive inspection of the first molded body region can be acquired using the finite element method without actually measuring the mechanical properties or the non-destructive inspection of the first molded body region.

[Temperature distribution image] The temperature distribution information is preferably a temperature distribution image. The temperature distribution image refers to an image obtained by capturing a distribution of a temperature of a molded body region (a) which is an object to be inspected by an infrared camera.

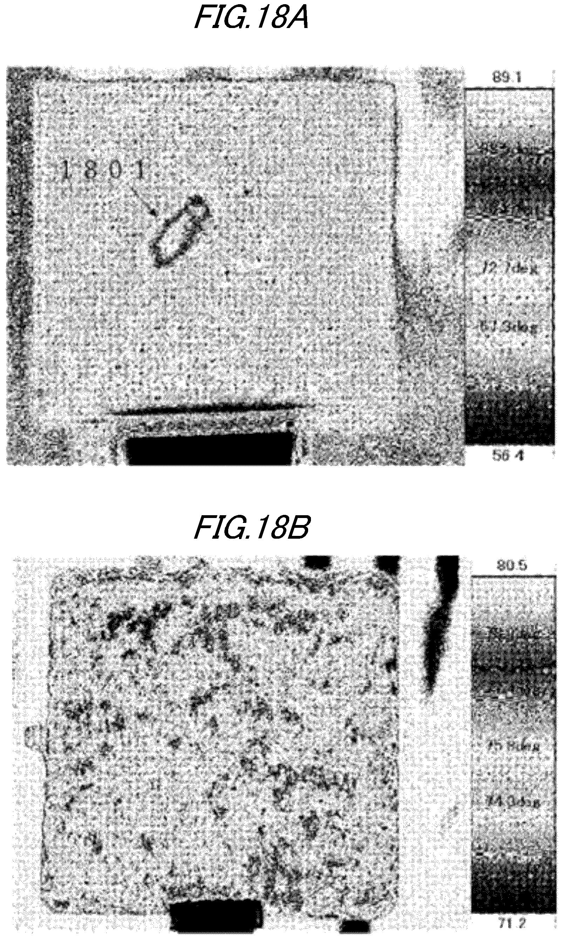

Specific temperature distribution images are shown in FIGS. 18A and 18B. FIG. 18A is an active thermographic image of a molded body region containing [voids]. FIG. 18B is an active thermographic image of a molded body region formed by flow-molding a sheet molding compound in a mold. At the time of acquiring these images through active thermography measurements, a molded body region (a) as an object to be inspected was fixed with a clamp, and two halogen lamps (CHP500 manufactured by Caster Ltd.) were respectively installed so that heat could be irradiated from angles of 45° left and right to the surfaces of the molded body region (a). Heat irradiated from these two halogen lamps was reflected by the surface of the molded body region (a), and the reflected heat was measured by an infrared camera (A615 manufactured by FLIR Systems Inc.). The heat source frequency was 0.1 Hz, the frame rate was 25 Hz, and the photographing time was 125 seconds. It was confirmed in reference sign 1801 in FIG. 18A that a defect in the molded body region was visualized. When such a defect is present, mechanical properties such as fracture strength and elastic modulus tend to decrease in a portion of the defect in the molded body region.

A sheet molding compound is obtained by impregnating a chopped fiber bundle mat with a thermosetting resin as a matrix resin, the chopped fiber bundle mat being obtained by depositing chopped fiber bundles in a sheet form, the chopped fiber bundles being obtained by cutting a fiber bundle of continuous reinforcing fibers. When a molded body region is formed by flow-molding a sheet molding compound in a mold, an orientation and a distribution of the chopped fiber bundles change depending on a flow in the mold, and a mechanical property of the molded body region may change according to an orientation and a distribution of the chopped fiber bundles.

The chopped fiber bundle and the matrix resin contained in the sheet molding compound have different thermal conductivity. Therefore, in the molded body region molded from the sheet molding compound, a change in temperature distribution may occur depending on the chopped fiber bundles distributed in the matrix resin. Therefore, as shown in FIG. 18B, the temperature distribution image of the molded body region molded from the sheet molding compound has a complicated pattern according to the distribution and orientation of the chopped fiber bundles.

As described above, since the temperature distribution image and the mechanical properties may change according to the orientation and distribution of the chopped fiber bundles contained in the sheet molding compound, there is a correlation between the temperature distribution image and the mechanical properties in the molded body region .

It is clear that the mechanical property information of the molded body region cannot be inferred from the temperature distribution images in FIGS. 18A and 18B even if a person works hard.

In the inspection device 1 of the present embodiment, the mechanical property inference model is generated using the training data in which the temperature distribution image of the first molded body region and the mechanical property information obtained by measuring the first molded body region that is the acquisition source of the temperature distribution image are associated. By using the inspection device 1 of the present embodiment, since the mechanical property information of the second molded body region can be inferred from the temperature distribution image of the second molded body region, the mechanical property information that cannot be inferred no matter how hard a skilled worker works can be inferred instantaneously without actually measuring the mechanical property information.

A method for acquiring the temperature distribution image is not particularly limited, and for example, infrared thermography can be used. Infrared thermography is a non-destructive inspection that knows an internal state from a temperature and a temperature change of a surface of an object. When measuring an object that does not generate heat by externally exciting the object, the method is called active thermography. An excitation method used in infrared thermography is not particularly limited, and may be heating or cooling, but is preferably heated from the outside to capture an infrared thermographic image. Heating can be performed by radiant heat, vibration energy from ultrasonic waves, electromagnetic force, sunlight, or the like, and cooling can be performed by means such as natural cooling, vaporization heat, and low-temperature gas blowing. A temperature change occurs on the heated or cooled surface, and the temperature change can be detected by an infrared sensor to infer an internal state.

When heating the molded body region containing the fibers and the thermoplastic resin, the heating temperature is preferably equal to or lower than the softening point of the thermoplastic resin. When the molded body is heated and observed at or below the softening point, it is less likely to adversely affect the molded body.

[Inspection system]

In the following, data converted into a format that can be input to an input layer of a neural network will be described as input data. In the inspection system, non-destructive inspection information (hereinafter, referred to as a non-destructive inspection information sample) of a sample (hereinafter, referred to as a molded body region sample (b)) of the first molded body region (a) and mechanical property information (hereinafter, referred to as a mechanical property information sample) actually measured from the molded body region sample (b) are acquired and used as second input data, and the neural network is trained using the second input data. When the training of the neural network is completed, the non-destructive inspection information of the molded body region (a) is input as the first input data to the neural network, and the mechanical property information of the molded body region (a) is inferred based on the reaction value in the output layer from the neural network. Based on the inferred mechanical property information, the molded body region (a) may be sorted into good product or defective product.

Since the inspection system performs effective training and highly accurate inference, non-destructive inspection information optimized for the training process and the inference process can be used. For example, various image processing may be performed on the vibration inspection image so that the feature amount is easily detected from the vibration inspection image, the acoustic characteristic image, or the temperature distribution image.

[Inspection device]

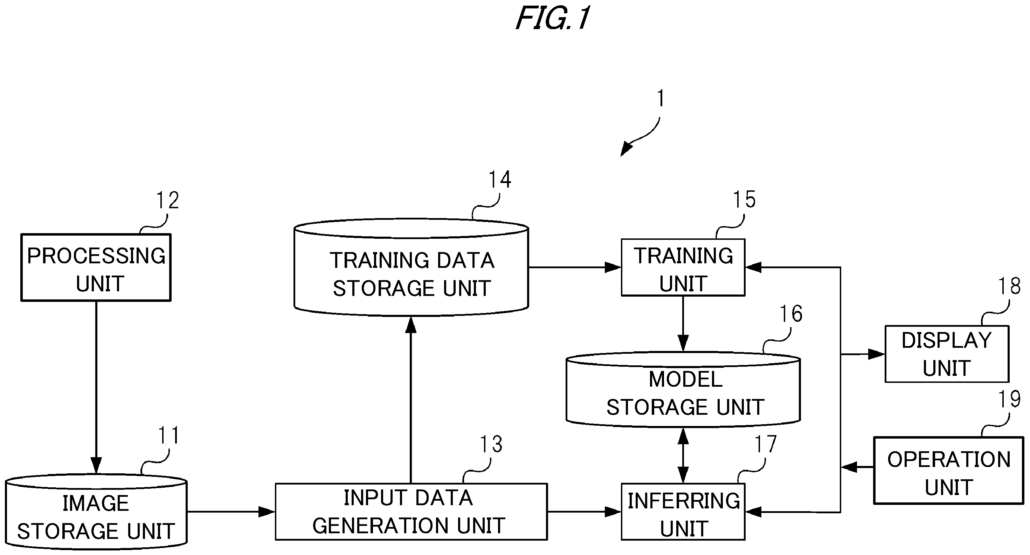

FIG. 1 is a block diagram showing a configuration example of an inspection device 1. The inspection device 1 performs image processing, generation of input data, training of a neural network, inference of mechanical property information using the neural network, and the like. The inspection device 1 is an information processing device such as a computer including one or more processors configured by CPUs (Central Processing Unit) and the like, a storage unit, and a communication unit, and in which an OS (operating system) and an application operate. The test device 1 may be a physical computer, or may be realized by a virtual machine (VM), container, or a combination thereof. A structure of the processor is more specifically an electric circuit in which circuit elements such as semiconductor elements are combined.

The inspection device 1 includes an image storage unit 11 that stores non-destructive inspection information and a non-destructive inspection information sample, a processing unit 12 that processes the non-destructive inspection information and the non-destructive inspection information sample, an input data generation unit 13, a training data storage unit 14, a training unit 15, a model storage unit 16, an inferring unit 17, a display unit 18, and an operation unit 19. The processing unit 12, the input data generation unit 13, the training unit 15, and the inferring unit 17 are functional blocks realized by a processor of the inspection device 1 executing a program, respectively. The program includes A program for inspecting the molded body region.

The image storage unit 11 is a storage region that stores non-destructive inspection information (preferably, a vibration inspection image, an acoustic characteristic image, or a temperature distribution image). The picture storage unit 11 may be a volatile memory such as an SRAM (Static Random Access Memory) or a DRAM (Dynamic Random Access Memory), or a nonvolatile memory such as a NAND-type flash memory, a magnetoresistive memory (MRAM: Magnetoresistive Random Access Memory), or a ferroelectric memory (FeRAM: Ferroelectric Random Access Memory).

The processing unit 12 performs image processing on the non-destructive inspection information (preferably, a vibration inspection image, an acoustic characteristic image, or a temperature distribution image), and stores the image after the image processing in the image storage unit 11. Examples of the image processing include generation of images in which the luminance of each color of red, green, and blue (RGB) in pixels in an image is extracted, generation of an image in which the luminance of red (R) is subtracted from the luminance of green (G) in each pixel, generation of an image in which only a red component is extracted after conversion into an HSV color space, and the like.

The processing unit 12 may perform enlargement, reduction, cut-out, noise removal, rotation, inversion, color depth change, contrast adjustment, brightness adjustment, sharpness adjustment, color correction, and the like of an image.

The input data generation unit 13 generates input data input to the input layer of the neural network from the non-destructive inspection information or the non-destructive inspection information sample stored in the image storage unit 11. For example, when training to be described later is performed using the vibration inspection image, it is preferable to cut out a desired portion from the vibration inspection image or remove an extra portion to obtain the second input data.

When the inspection device 1 is executing the training process, the input data generation unit 13 stores the input data in the training data storage unit 14. When the inspection device 1 is inspecting the molded body region (a), the input data is transferred to the inferring unit 17.

When performing the training process, the input data generation unit 13 may generate the input data using, for example, an image (non-destructive inspection information sample) captured by an external device or system.

The training data storage unit 14 is a storage area for storing a plurality of input data used for training of a neural network. The input data saved in the training data storage unit 14 is used as training data in the training unit 15. The input data (second input data) used as the training data is stored in association with the mechanical property information samples obtained from measurement of the molded body region sample (b) from which the input data is acquired. The mechanical property information sample may include, in addition to at least one of a mechanical property rank and a mechanical property value (for example, an elastic modulus) of the molded body region sample (b), information indicating that the mechanical property value corresponds to a good product, information indicating that the mechanical property value corresponds to a defective product, information indicating that it is difficult to infer the mechanical property value, and the like.

For example, association of the mechanical property information sample with the second input data obtained from the molded body region sample (b) (hereinafter, this association is also referred to as labeling) can be directly performed by the user inputting the mechanical property value (for example, elastic modulus) of the molded body region sample (b) with operating the operation unit 19. After the input, the inspection device 1 divides the mechanical property values into mechanical property ranks. For example, the tensile elastic moduli can be divided into the following mechanical properties ranks.

Rank of mechanical properties 1: tensile elastic modulus of molded body region is 30 GPa or more

Rank of mechanical properties 2: tensile elastic modulus of molded body region is 25 to 30 GPa

Rank of mechanical properties 3: tensile elastic modulus of molded body region is 25 GPa or less

The mechanical property rank may be output in units of 3 GPa or 1 GPa instead of every 5 GPa as described above. If the mechanical property information sample corresponding to the second input data obtained from the molded body region sample (b) is known, the mechanical property rank may be automatically labeled by a program, a script, or the like, instead of the user's operation. The labeling of the mechanical property rank may be performed before the conversion of the non-destructive inspection information sample obtained from the molded body region sample (b) into the second input data, or may be performed after the conversion into the second input data.

The training unit 15 trains the neural network using the input data (the second input data) stored in the training data storage unit 14. The training unit 15 stores the trained neural network in the model storage unit 16. The training unit 15 can learn, for example, a neural network of three layers: an input layer, a hidden layer, and an output layer. By training the three-layer neural network, it is possible to ensure a real-time response performance during inspection of the molded body region (a). The number of units included in each of the input layer, the hidden layer, and the output layer is not particularly limited. The number of units included in each layer can be determined based on a required response performance, an inference target, an identification performance, and the like.

The three-layer neural network is merely an example, and it does not prevent the use of a multilayer neural network having a larger number of layers. When a multilayer neural network is used, various neural networks such as a convolutional neural network can be used.

The model storage unit 16 is a storage area for storing the neural network trained by the training unit 15. The model storage unit 16 may store a plurality of neural networks according to the type of the molded body region (a) to be inspected. Since the model storage unit 16 is set to be accessible from the inferring unit 17, the inferring unit 17 can inspect (infer the mechanical property information of) the molded body region (a) using the neural network stored in the model storage unit 16. The model storage unit 16 may be a volatile memory such as a RAM or a DRAM, or a non-volatile memory such as NAND, MRAM, or FRAM (registered trademark). The model storage unit 16 needs only to be located at a location accessible to the processor of the inspection device 1 and may not be built in the inspection device 1. For example, the model storage unit 16 may be a storage externally attached to the inspection apparatus 1 or may be a network storage connected to a network accessible from the inspection apparatus 1.

The inferring unit 17 infers the mechanical property information of the molded body region (a) using the neural network stored in the model storage unit 16. The inferring unit 17 infers the mechanical property rank of the molded body region (a) based on the reaction value output from the unit of the output layer. Examples of the unit of the output layer include a unit indicating mechanical property rank 1, a unit indicating mechanical property rank 2, a unit indicating mechanical property rank 3, and a unit indicating that mechanical property is difficult to guess, but other types of units may be prepared. For example, there is a possibility that a large amount of foreign matters or the like is mixed in those with a low inferred mechanical property rank. The mechanical property rank of the molded body region (a) may be inferred using a difference or ratio of reaction values of a plurality of units.

The display unit 18 is a display for displaying images and text. The display unit 18 may display a captured image, an image after image processing, and an inference result by the inferring unit 17.

The operation unit 19 is a device that provides operation means of the inspection device 1 by the user. The operation unit 19 is, for example, a keyboard, a mouse, a button, a switch, a voice recognition device, or the like, but is not limited thereto.

[Training processing]

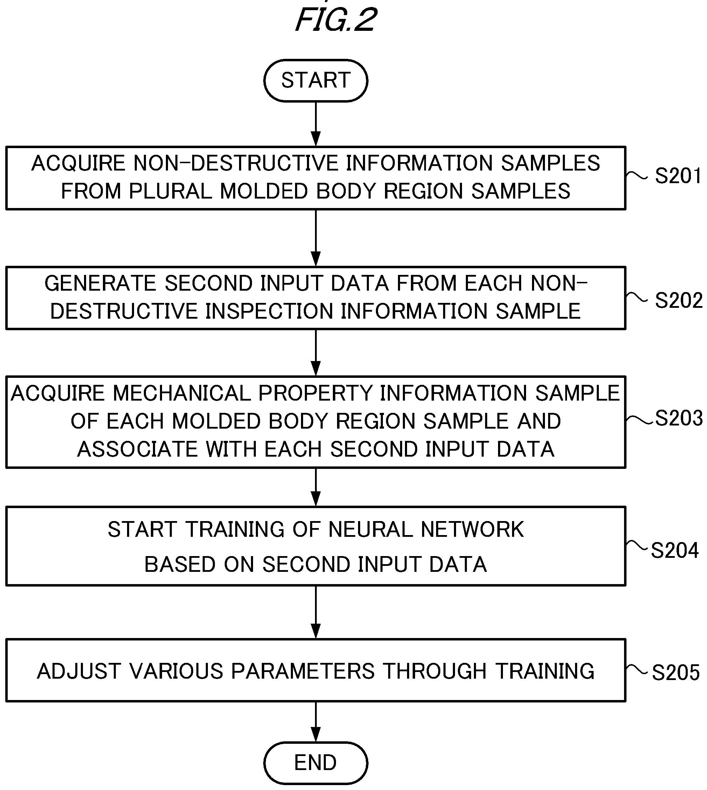

Before inferring the mechanical property rank of the molded body region (a) by the inspection device 1, it is necessary to train the neural network using the non-destructive inspection information sample and the mechanical property information sample of the molded body region sample (b) of the same type as the molded body region (a). FIG. 2 is a flowchart of the training process.

First, the processor of the inspection device 1 acquires non-destructive information samples of each of the plurality of molded body region samples (b) (step S201). The non-destructive inspection information samples here are those with a high mechanical property rank or those with a low mechanical property rank. When a unit that outputs a reaction value of the difficulty of inference is provided in the output layer of the neural network, a non-destructive inspection information sample in which the mechanical property information is difficult to infer may be prepared. When the non-destructive inspection information sample is an image, examples of the non-destructive inspection information sample in which mechanical property is difficult to infer include an image in which the molded body region sample (b) is not sufficiently captured, an image in which the brightness adjustment by illumination or exposure is inappropriate and the molded body region sample (b) is not clearly captured, and the like.

The processor of the inspection device 1 generates the second input data from the acquired non-destructive inspection information samples (step S201). Next, the processor of the inspection device 1 acquires the mechanical property information sample of each of the plurality of molded body region samples (b) and stores the acquired mechanical property information sample in association with each of the second input data (step S203).

Step S203 may be performed before step S202. In this case, the mechanical property information sample associated with the non-destructive inspection information sample may be handed over to the second input data even after each non-destructive inspection information sample is converted to the second input data.

Next, the processor of the inspection device 1 starts training of the neural network based on the second input data (step S204).

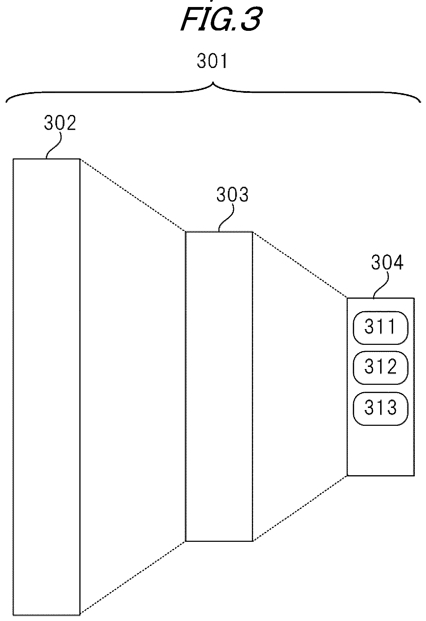

FIG. 3 shows an example of a neural network that outputs three response values. The neural network 301 in FIG. 3 is a neural network having three layers: an input layer 302, a hidden layer 303, and an output layer 304. The output layer 304 includes a unit 311,312,313 for inferring a mechanical property rank. Although three units 311,312,313 are shown in FIG. 3, the number of units can be appropriately increased or decreased according to the rank of mechanical properties.

In the neural network, the value input to the input layer is propagated to the hidden layer and the output layer, and a reaction value of the output layer is obtained. In step S205, each parameter or structure of the neural network is adjusted, such as the number of hidden layers 303, the number of units included in each of the input layer 302 and the hidden layer 303, and a coupling coefficient between units included in each of the input layer 302 and the hidden layer 303, such that a mechanical property information sample associated with the second input data or information close thereto is output from the neural network with a high probability when the second input data is input to the neural network. In this manner, the mechanical property inference model is generated and stored in the model storage unit 16.

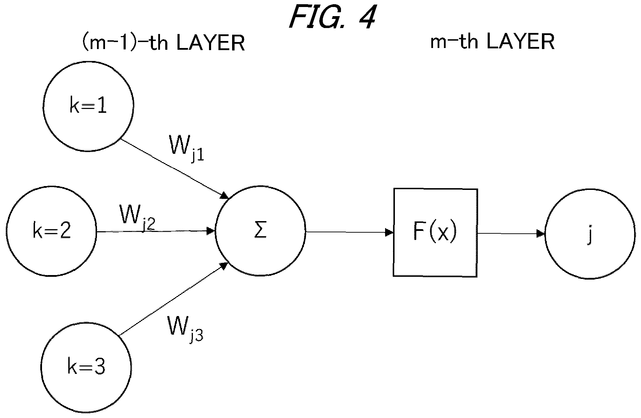

FIG. 4 shows arithmetic processing between units of a neural network. FIG. 4 shows units of the (m-1)-th layer and units of the m-th layer. For the purpose of explanation, only some of units of the neural network are shown in FIG. 4. The unit number in the (m-1)-th layer is k = 1, 2, 3, ... The unit number in the m-th layer is j = 1, 2, 3, ...

When the reaction value of the unit number k of the (m-1)-th layer is $a_k^{m-1}$, the reaction value $a_j^m$ of the unit number j of the m-th layer is obtained using the following formula (2).

[Mathematical formula 1]

$$a_j^m = f\left(\sum_k W_{jk}^m \, a_k^{m-1} + b_j^m\right) \qquad (2)$$

Here, $W_{jk}^m$ is a weight, and indicates the strength of coupling between units. The $b_j^m$ is a bias. f (...) is an activation function. From the formula (2), it can be seen that the reaction value of any unit in the m-th layer is an output value when the reaction values of all the units (k = 1, 2, 3 ...) in the (m-1)-th layer are weighted and added and input as a variable of the activation function.

Next, an example of the activation function will be described. The following formula (3) is a normal distribution function.

[Mathematical formula 2]

$$f(x) = \frac{1}{\sqrt{2\pi}\sigma} exp\left\{-\frac{(x-\mu)^2}{2\sigma^2}\right\} \qquad (3)$$

Here, $\mu$ is an average value, and indicates a center position of a bell-shaped peak drawn by the normal distribution function. $\sigma$ is a standard deviation and indicates the width of the peak. Since the value of formula (3) depends only on the distance from the center of the peak, the Gaussian function (normal distribution function) can be said to be a kind of radial basis function (RBF). The Gaussian function (normal distribution function) is an example, and other RBFs may be used.

The following formula (4) is a sigmoid function. The sigmoid function asymptotically approaches 1.0 in the limit of x $\rightarrow$ $\infty$. In addition, it asymptotically approaches 0.0 in the limit of x $\rightarrow$ $^-\infty$. That is, the sigmoid function takes a value in a range of (0.0, 1.0).

[Mathematical formula 3]

$$f(x) = \frac{1}{1 + exp(-x)} \qquad (4)$$

It should be noted that the use of a function other than the Gaussian function or the sigmoid function as the activation function is not prevented. For example, the present inventors used Relu for the convolution layer and softmax for the output layer.

In the training of the neural network, the weight $W_{jk}$, which is the strength of the coupling between the units, is adjusted so that a correct output is obtained when the input data is input to the input layers. The correct output (reaction value of unit of output layer) expected when input data labeled with a certain mechanical property rank is input to a neural network is also called a training signal.

For example, when input data labeled with a mechanical property rank of 311 is input to the neural network 301, the reaction value of the unit 311 is 1, the reaction value of the unit 312 is 0, and the reaction value of the unit 313 is 0 in the training signal. When input data labeled with a mechanical property rank of 312 is input to the neural network 301, the reaction value of the unit 311 is 0, the reaction value of the unit 312 is 1, and the reaction value of the unit 313 is 0 in the training signal.

For example, the weight $W_{jk}$ can be adjusted using error back propagation method (Back Propagation Method). In the back propagation method, the weight $W_{jk}$ is adjusted in order from the output layer side so that a deviation between an output of the neural network 310 and a training signal is small. The following formula (5) shows an improved back propagation method.

[Mathematical formula 4]

$$W_{jk}(t+1) = W_{jk}(t) + \Delta W_{jk}(t)$$

$$\Delta W_{jk}(t) = -\eta\delta_k O_j + \alpha\Delta W_{jk}(t-1) + \beta\Delta W_{jk}(t-2) \qquad (5)$$

When the Gaussian function is used as the activation function, not only the weight $W_{jk}$ but also $\sigma$ and $\mu$ in formula (3) are adjusted as parameters in the improved back propagation method. The learning convergence of the neural network is assisted by adjusting the values of the parameters $\sigma$ and $\mu$. The following formula (6) shows a value adjustment process performed on the parameter $\sigma$.
[Mathematical formula 5]

$$\sigma_{jk}(t+1) = \sigma_{jk}(t) + \Delta\sigma_{jk}(t)$$

$$\Delta\sigma_{jk}(t) = -\eta\delta_k O_j + \alpha\Delta\sigma_{jk}(t-1) + \beta\Delta\sigma_{jk}(t-2) \qquad (6)$$

The following formula (7) shows a value adjustment process performed on the parameter $\mu$.
[Mathematical formula 6]

$$\mu_{jk}(t+1) = \mu_{jk}(t) + \Delta\mu_{jk}(t)$$

$$\Delta\mu_{jk}(t) = -\eta\delta_k O_j + \alpha\Delta\mu_{jk}(t-1) + \beta\Delta\mu_{jk}(t-2) \qquad (7)$$

Here, t is the number of times of learning, $\eta$ is a learning coefficient, $\delta_k$ is a generalization error, $O_j$ is a response value of unit number j, $\alpha$ is a sensitivity constant, and $\beta$ is a vibration constant. $\Delta W_{jk}$, $\Delta\sigma_{jk}$, and $\Delta\mu_{jk}$ indicate the correction amounts of the weights $W_{jk}$, $\sigma$, and $\mu$, respectively.

Here, the process of adjusting the weight $W_{jk}$ and the parameter has been described with reference to the improved back propagation method, but a general back propagation method may be used instead. In the case of simply referring to the back propagation method hereinafter, it is assumed that both the improved back propagation method and the general back propagation method are included.

The number of times of adjusting the weight $W_{jk}$ or the parameter by the back propagation method may be one or a plurality of times, and is not particularly limited. Generally, it is possible to determine whether or not to repeat the adjusting of the weight $W_{jk}$ and the parameter using the back propagation method based on the inference accuracy of the mechanical property rank when the test data is used. When the weight $W_{jk}$ and the parameter are repeatedly adjusted, the inference accuracy of the mechanical property rank may be improved.

By using the above methods, the weight $W_{jk}$ and the parameters $\sigma$, $\mu$ can be determined in step S205. When the weight $W_{jk}$ and the parameters $\sigma$ and $\mu$ are determined, an inference process using a neural network can be performed.

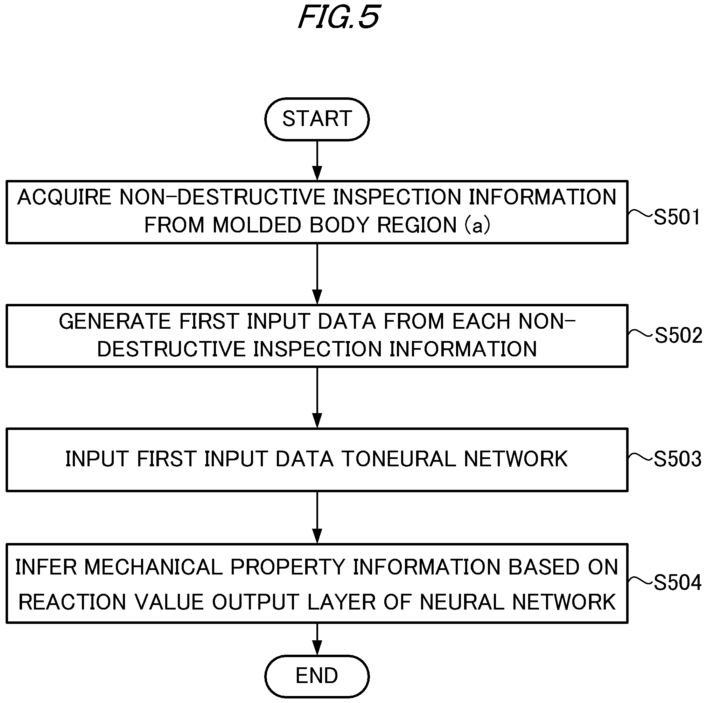

FIG. 5 is a flowchart for describing an inference operation of mechanical property information by the inspection device 1 that operates in accordance with an inspection program of a molded body region. The processor of the inspection device 1 acquires the non-destructive inspection information of the molded body region (a) (preferably captures a vibration inspection image, an acoustic characteristic image, or a temperature distribution image) (step S501). When the vibration inspection image, the acoustic characteristic image, or the temperature distribution image is the non-destructive inspection information, there may be a step of performing image processing on the vibration inspection image, the acoustic characteristic image, or the temperature distribution image between steps S501 and S502.

Next, the processor of the inspection device 1 generates the first input data from the non-destructive inspection information (step S502). The first input data has N elements equal to the number of units in the input layer of the neural network, and is in a form capable of being input to the neural network.

Next, the processor of the inspection device 1 inputs the first input data to the neural network (step S503). The first input data is transmitted in order of an input layer, a hidden layer, and an output layer. The processor of the inspection device 1 infers the mechanical property rank based on the reaction value in the output layer of the neural network (step S504).

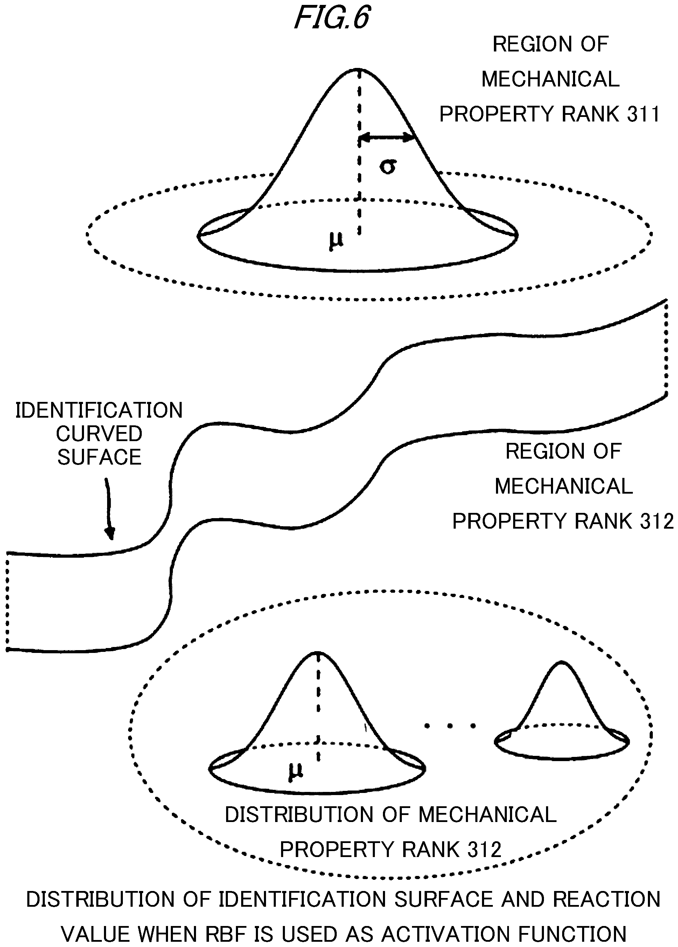

The inference process using the neural network is equivalent to the process of finding the position of the first input data in the identification space. FIG. 6 shows an example of an identification space when a Gaussian function is used for the activation function. When RBF such as a Gaussian function is used as the activation function, a discrimination curved surface for dividing the discrimination space into regions for each rank of mechanical properties becomes a closed curved surface. By adding an index in the height direction to each category of the mechanical property ranks, it is possible to localize the regions related to the respective categories in the identification space.

FIG. 7 shows an example of an identification space when a sigmoid function is used for the activation function. When the activation function is a sigmoid function, the identification curved surface is an open curved surface. The above-described training process of the neural network corresponds to a process of learning the identification curved surface in the identification space. Although only the mechanical property rank 311 and the mechanical property rank 312 are shown in the regions in FIGS. 6 and 7, there may be a distribution of three or more mechanical property ranks.

As described above, by using the inspection system of the present embodiment, the mechanical property information of the molded body region (a) can be inferred from the non-destructive inspection information (preferably, the vibration inspection image, the acoustic characteristic image, or the temperature distribution image) of the molded body region (a). The inventions described in Patent Literature 2 (WO2019/151393) or Patent Literature 3 (WO2019/151394) merely uses a neural network to replace what humans can make judgements by viewing an image or a measurement target. That is, in these inventions, since the inspection target is a food photographed, a human can easily determine whether or not there is a foreign substance or the like in the food.

On the other hand, the mechanical property information is a numerical value, a rank equivalent thereto, or the like, and the non-destructive inspection information (preferably a vibration inspection image, an acoustic characteristic image, or a temperature distribution image) is obtained by visualizing or quantifying a state inside the molded body region. That is, even if a skilled worker views the non-destructive inspection information, it is not possible to infer the mechanical property information from the non-destructive inspection information.

For example, it is clear that a person cannot infer the mechanical property information from the vibration inspection images in FIGS. 8A to 8D or the temperature distribution images in FIGS. 18A to 18B even if the person works hard. By using the inspection device 1 of the present embodiment, it is possible to instantly infer the mechanical property information without actually estimating the mechanical property information that cannot be inferred by a skilled worker no matter how he or she works hard.

In the above embodiment, an example has been described in which the mechanical property information is inferred from the non-destructive inspection information of the plate-shaped molded body region, but the present invention is not limited to the plate-shaped molded body region, and the mechanical property information can be inferred from the non-destructive inspection information even for a molded body region having a three-dimensional shape.

Hereinafter, an example in which a plate-shaped composite material is molded in a mold to obtain a molded body region will be described. In the following, the plate-shaped composite material before being molded by the mold is collectively referred to as composite material MX. In the following description, the composite material M, the composite material Ms, the composite material M2, and the composite material M3 are exemplified as the composite material MX. The composite material MX preferably contains discontinuous fibers. The composite material MX may include a thermoplastic resin as a matrix resin. It is particularly preferable that the composite material MX is a sheet molding compound obtained by impregnating a chopped fiber bundle mat with a thermosetting resin as a matrix resin, the chopped fiber bundle mat being obtained by depositing chopped fiber bundles in a sheet form, the chopped fiber bundles being obtained by cutting a fiber bundle of continuous reinforcing fibers.

[Molding method of composite material MX]

A method for molding the composite material MX is not particularly limited, and press molding (compression molding), autoclave molding, vacuum molding, or the like is used, but press molding is preferably used.

[Mold]

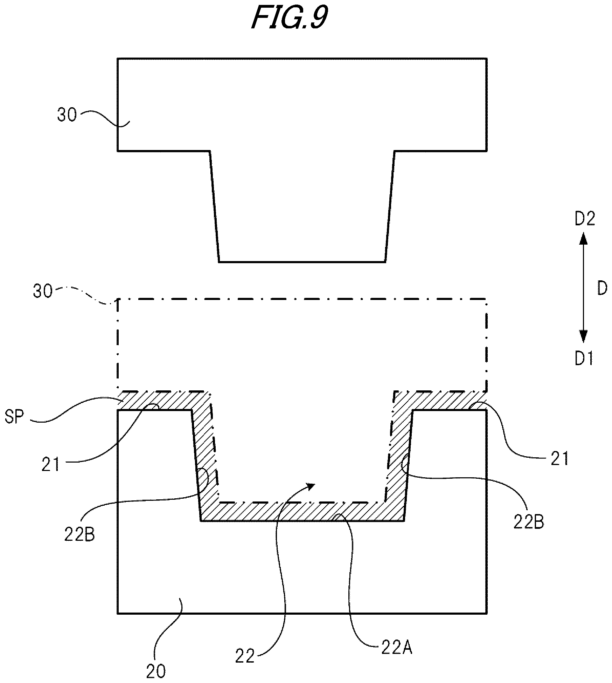

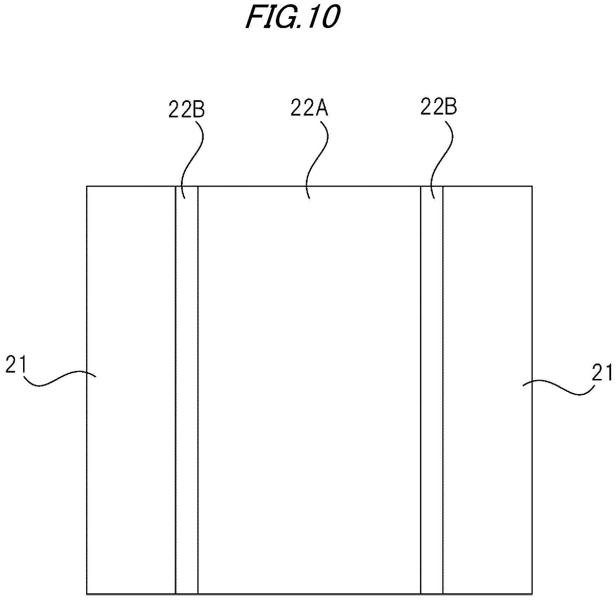

FIG. 9 is a side view schematically showing an example of a mold used for press molding of the composite material MX. FIG. 10 is a schematic plan view of the fixed mold 20 in the mold shown in FIG. 9 viewed from the side of the movable mold 30. A mold shown in FIG. 9 includes a fixed mold 20 and a movable mold 30 configured to be movable with respect to the fixed mold 20. A concave portion 22 is formed in an upper surface 21 of the fixed mold 20 facing the movable mold 30. The concave portion 22 is a region partitioned by a bottom surface 22A and a pair of side surfaces 22B connecting the bottom surface 22A and the upper surface 21. The movable mold 30 is configured to be movable in directions D including a direction D1 approaching the fixed mold 20 and a direction D2 away from the fixed mold 20. The direction D1 is a direction in which pressure is applied to the composite material MX when the composite material MX is molded. When the molding method is vacuum molding, the direction D1 is the suction direction.

In a state in which the movable mold 30 is closest to the fixed mold 20 (a state in which the movable mold 30 is located at a position indicated by a dashed-dotted line in the drawing), a mold cavity (space SP indicated by a hatch line in the drawing) is formed between the movable mold 30 and the fixed mold 20.

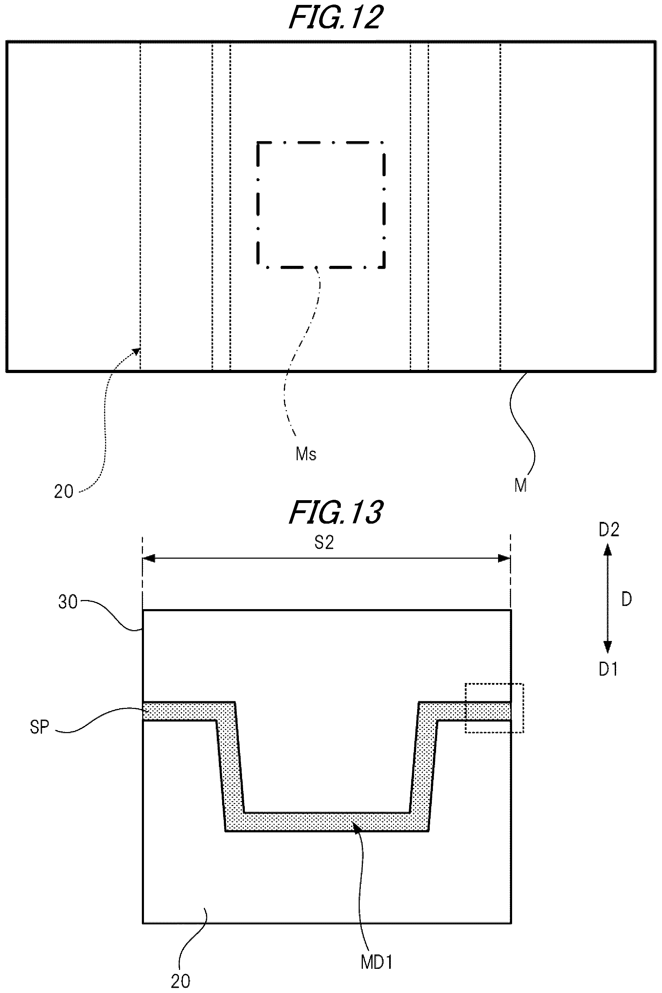

The mold cavity is a space for forming a molded body. In some cases, an unnecessary portion is trimmed at an end portion or the like of a molded body obtained by molding the composite material MX by a mold. In this case, a space for forming the molded body that is trimmed and finally remains in the space SP shown in FIG. 9 becomes a mold cavity. For example, a case is assumed in which a portion indicated by a dashed line is trimmed in the molded body MD1 shown in FIG. 13 obtained by molding the composite material M with the mold shown in FIG. 9 to form a final product. In this case, a portion of the space SP excluding the area indicated by the broken line becomes the mold cavity.

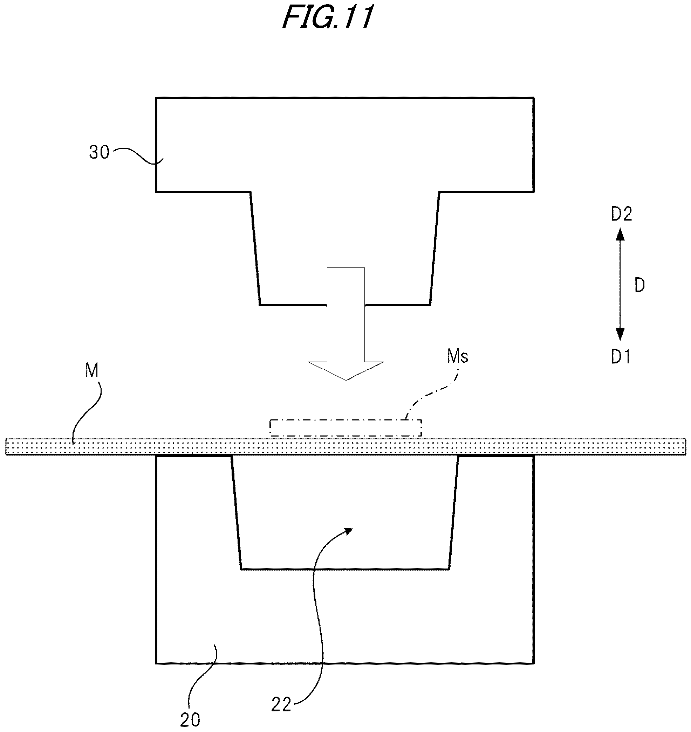

FIG. 11 is a schematic diagram showing an example of a method of molding a single composite material M by the mold shown in FIG. 9. The plate-shaped composite material M is disposed in a state of covering the concave portion 22 on the upper surface 21 of the fixed mold 20. FIG. 12 is a schematic plan view of the fixed mold 20 and the composite material M shown in FIG. 11 viewed in the direction D1. When the movable mold 30 is moved in the direction D1 from the state shown in FIG. 11, the composite material M flows due to the pressure from the movable mold 30, and is deformed along the shape of the space SP, and as shown in FIG. 13, the molded body MD1 is obtained. In the examples of FIGS. 11 to 13, the entire molded body region obtained by molding the composite material M constitutes the molded body MD1.

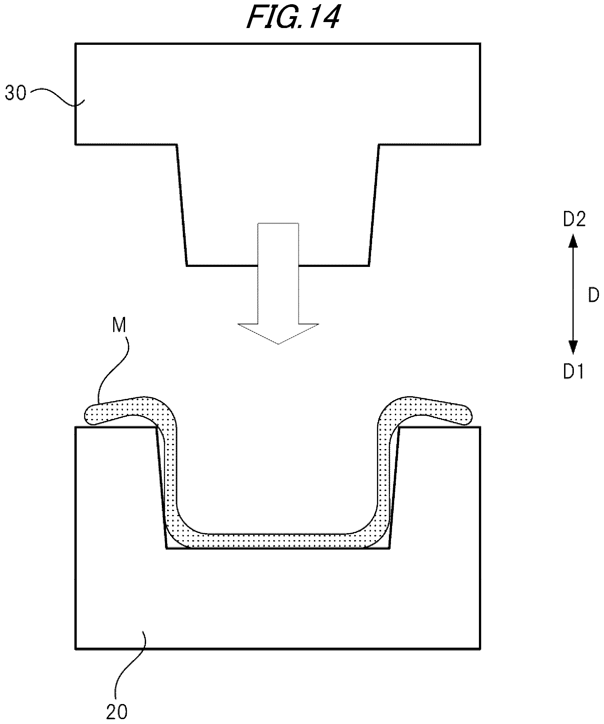

When the composite material M contains a thermoplastic resin as a matrix resin, the composite material M may be molded by cold pressing. When the molding method is a cold press, the composite material M is heated before the pressing to perform preforming. As shown in FIG. 14, the preformed composite material M is disposed on an upper surface and a concave portion of the fixed mold 20. After that, when the movable mold 30 is moved in the direction D1 from the state shown in FIG. 14, the preformed composite material M flows due to the pressure from the movable mold 30, and is deformed along the shape of the space SP, and as shown in FIG. 13, the molded body MD1 is obtained.

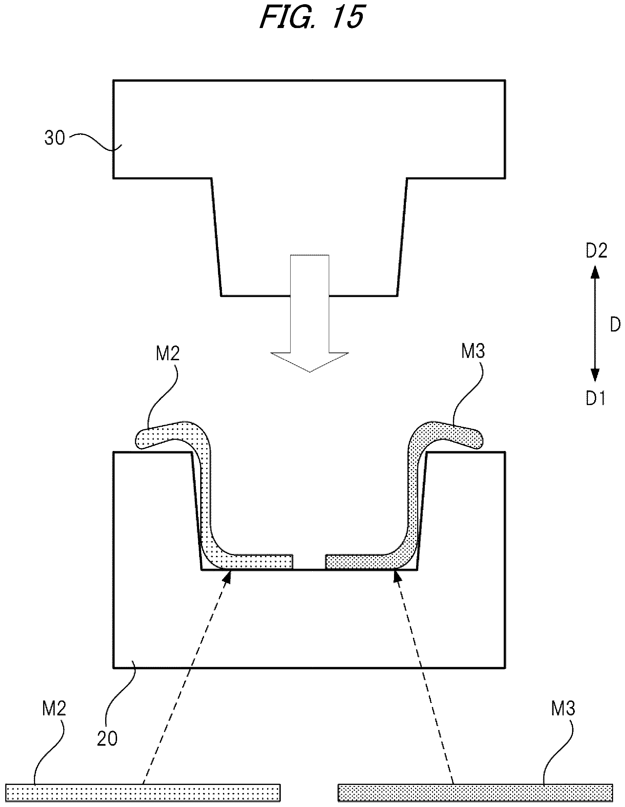

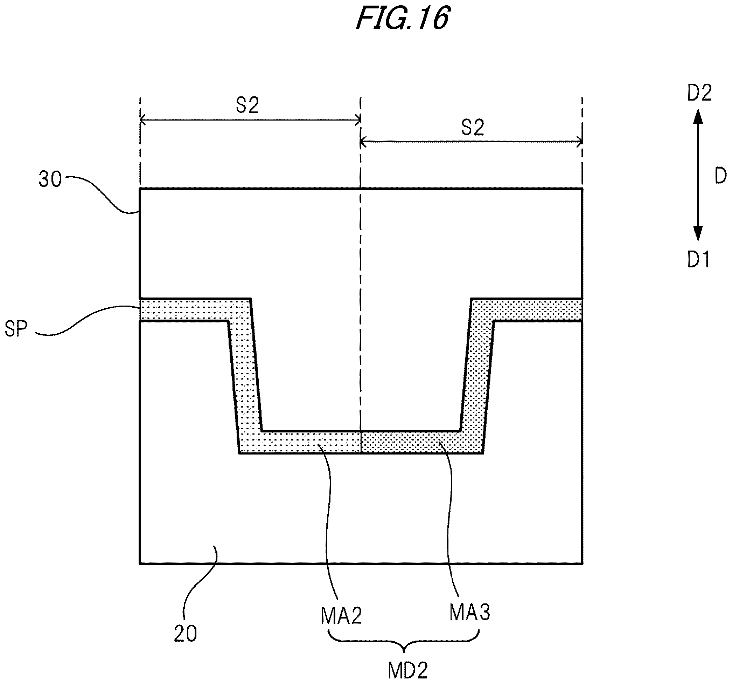

When a molded body is manufactured by a mold, the number of the composite materials MX from which the molded body are made may be one or more. For example, as indicated by dashed-dotted lines in FIGS. 11 and 12, there may be a case where another plate-shaped composite material Ms is disposed on the composite material M and then molding is performed. As shown in FIG. 15, there may be a case where a plurality of preformed plate-shaped composite materials (composite material M2 and composite material M3) are disposed on fixed mold 20 so as not to overlap each other and then molded. When the movable mold 30 is moved in the direction D1 from the state shown in FIG. 15, the pre-shaped composite material M2 and the composite material M3 flow under the pressure from the movable mold 30, and are deformed along the shape of the space SP. As shown in FIG. 16, a molded body MD2 comprising a molded body region MA2 obtained by molding the composite material M2 and a molded body region MA3 obtained by molding the composite material M3 is obtained. In the examples of FIGS. 15 and 16, the molded body region MA2 obtained by molding the composite material M2 and the molded body region MA3 obtained by molding the composite material M3 constitute parts of the molded body MD2 respectively.

[Projection area S1 of composite material MX constituting molded body]

(1) When the molded body is formed of a single composite material MX, the planar area of the composite material MX is defined as the projected area S1 of the single composite material MX (in the case of employing cold press molding, in a state before preforming) in the thickness direction. In the example of FIG. 11, the planar area of the composite material M is the projected area S1.

(2) It is assumed that the molded body is formed of a plurality of composite materials MX, and the plurality of composite materials MX are molded in a overlapped state. In this case, the molded body is considered to be constituted by a single molded body region. Then, when the plurality of composite materials MX (in the case of cold press molding, a material in a state before preforming) in an overlapped state is viewed in each thickness direction, a plane area of the entire plurality of composite materials MX is defined as the projected area S1.

    (i) In the example of FIG. 12, the entire composite material Ms overlaps with the composite material M. Therefore, the projected area S1 is the same as the planar area of the composite material M.

    (ii) In FIG. 12, for example, a case is assumed in which only a part of the composite material Ms is arranged so as to overlap with the composite material M. In this case, the sum of the planar area of the composite material M and the planar area of the region of the composite material Ms that does not overlap with the composite material M becomes the projected area S1.

(3) It is assumed that the molded body is formed of a plurality of composite materials MX, and the plurality of composite materials MX are arranged so as not to overlap each other before molding. In this case, the plane area of each composite material MX when the plurality of composite materials MX (in the case of cold press molding, those in a state before preforming) are viewed in each thickness direction is defined as the projected area S1. In the example of FIG. 15, the planar area of the composite material M2 when the composite material M2 before preforming is viewed in the thickness direction is the projected area S1. Further, a planar area of the composite material M3 when the composite material M3 before preforming is viewed in the thickness direction is the projected area S1.

[Projection area S2 of portion corresponding to molded body region in mold cavity]

It is assumed that the molded body formed by the mold cavity is considered to be constituted by (1) a single composite material MX or (2) a single molded body region obtained by molding the overlapped plurality of composite materials MX. In this case, the entire mold cavity (space SP) is a portion corresponding to the single molded body region. A planar area of this portion when viewed in the direction D1 is defined as the projected area S2. In the example of FIG. 13, the planar area of the space SP when viewed in the direction D1 is the projected area S2.

(3) It is assumed that the molded body formed by the mold cavity is formed by a plurality of molded body regions obtained by molding a plurality of composite materials MX arranged in a state of not overlapping with each other. In this case, a portion of the mold cavity in which each molded body region is present is a portion corresponding to each molded body region. A planar area when each portion is viewed in the direction D1 is defined as the projected area S2.

In the example of FIG. 16, a planar area of a part of the space SP where the molded body is present in the direction D1 is the projected area S2 of the molded body region MA2. In addition, a planar area of a part of the space SP where the portion of the molded body region MA3 is present in the direction D1 is the projected area S2 of the molded body region MA3.

In the case of producing a molded body by cold-pressing a plurality of composite materials MX spaced apart from each other, each composite material MX flows during molding to form a weld at the boundary. Therefore, when the completed molded body is observed, the "molded body regions obtained by molding each composite material MX" can be easily determined.

[Charge Ratio]

A value obtained by calculation of the following formula (C) is defined as a charge ratio of a molded body manufactured by a mold.

Charge rate [%] 100 × {(projected area S1 of composite material MX constituting molded body) / (projected area S2 of portion corresponding to molded body region in mold cavity)

As in the example shown in FIG. 16, in the case where the molded body MD2 includes the plurality of molded body regions MA2 and MA3, two charge rates are obtained for one molded body MD2 by substituting the projected area S1 and the projected area S2 for each molded body regions MA2 and MA3 in the formula (C).

That is, the first charge ratio is calculated by substituting the planar area of the composite material M2 as the projected area S1 and substituting the planar area of the portion of the mold cavity where the molded body region MA2 is present as the projected area S2 of the mold region MA2 into the formula (C). Further, the second charge rate is calculated by substituting the plane area of the composite material M3 as the projected area S1 and substituting the plane area of the portion of the mold cavity where the molded body region MA3 is present as the projected area S2 of the mold region MA3 into the formula (C).

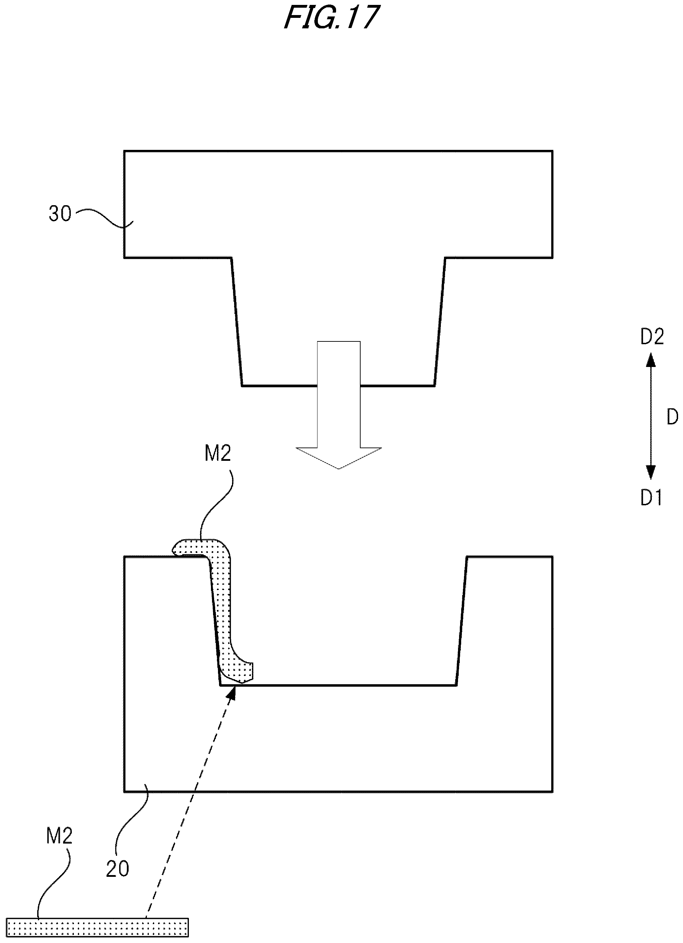

The larger the value of the charge ratio, the smaller the flowing distance of the composite material MX during molding. For example, a case in which only the molded body region MA2 shown in FIG. 16 is manufactured as a product using the mold shown in FIG. 9 will be described. In this case, as shown in FIG. 17, when the projected area S1 of the composite material M2 is smaller than that of the example shown in FIG. 15 and the charge rate is lowered, the flowing distance of the composite material M2 becomes longer than that of the example shown in FIG. 15. Here, the "flowing distance" can be expressed by a distance from an end of the composite material disposed in the mold to an end of a molded body region after the composite material is molded.

When the composite material MX contains discontinuous fibers, and the molded body region obtained by molding the composite material MX is fiber-reinforced by the discontinuous fibers, the fibers are oriented in the flowing direction at the same time as the flow of the composite material MX when the composite material MX flows to form the molded body region. Therefore, when the flowing distance of the composite material MX is short, the flow and the fiber orientation are easily controlled during molding, and the mechanical property quality of the molded body region at the time of mass production is stable. Here, the "mechanical property quality" is a quality that indicates the mechanical properties of the molded body region. Examples of the mechanical properties include a fracture strength such as a tensile strength, a flexural strength, and a shear strength; a tensile elastic modulus, a flexural modulus, and an elastic modulus related to each of a fracture strength, a compression strength, and a shear strength.

By generating the above-described mechanical property inference model using the training data obtained from the molded body region in which the mechanical property quality does not vary as much as possible, the inference accuracy of the mechanical properties can be improved. Specifically, as a first molded body region to be a measurement source of training data (non-destructive inspection information and mechanical property information) for training the mechanical property inference model or as a second molded body region to be subjected to inference of mechanical properties by the mechanical property inference model, it is preferable to apply materials obtained by molding a composite material MX in a mold so that a charge ratio is 10% or more and 500% or less, respectively.

As a structure of each of the first molded body region and the second molded body region, for example, a molded body MD1 shown in FIG. 13, a molded body region MA2 shown in FIG. 16, a molded body region MA3 shown in FIG. 16, or a molded body MD2 shown in FIG. 16 can be employed. In the case where each of the first molded body region and the second molded body region is the molded body MD2 shown in FIG. 16, it is sufficient that one of the charge ratio obtained for the composite material M2 and the molded body region MA2 and the charge ratio obtained for the composite material M3 and the molded body region MA3 is 10% or more and 500% or less.

When the charge ratio is less than 10%, the flowing distance of the composite material MX increases. Therefore, it is difficult to stabilize the mechanical property quality of each of the first molded body region and the second molded body region. Therefore, the lower limit of the charge rate is set to 10%. An upper limit of the charge ratio can be determined by the use of the product manufactured by the mold. When the upper limit is 500%, a product suitable for many applications can be targeted. In order to further stabilize the mechanical property quality of each of the first molded body region and the second molded body region, the charge ratio is preferably 50% or more, more preferably 70% or more, and even more preferably 80% or more. When the reinforcing fibers are discontinuous fibers and it is desired to improve the mechanical strength in a specific direction, anisotropy is likely to occur in the molded body region by setting the charge ratio to 10% or more and less than 50%, which is preferable.

[Isotropy of molded body region]

When the flow of the composite material MX at the time of molding is small, the fiber orientation of the composite material MX is similar to that of the molded body region after the molding of the composite material MX. In particular, in the case of an isotropic substrate in which the composite material MX is reinforced by discontinuous fibers, isotropy is ensured even in a molded body region if the flow during molding is small (in other words, if the charge ratio is large). Here, the isotropy can be evaluated by measuring the tensile elastic modulus in an arbitrary direction of the molded body region and a direction orthogonal thereto, and dividing a larger value of the measured tensile elastic moduli by a small value. The isotropy (ratio of the tensile elastic moduli) of each of the first molded body region and the second molded body region is preferably 1.5 or less, and more preferably 1.3 or less.

[Coefficient of variation (CV) of basis weight of molded body region]

The coefficient of variation (CV) of the basis weight of each of the first molded body region and the second molded body region is preferably 10% or less. Here, the basis weight is the mass of the molded body region per unit area. When the coefficient of variation (CV) of the basis weight is 10% or less, physical properties of each of the first molded body region and the second molded body region are uniform. Therefore, the mechanical property inference model easily infer the mechanical properties.

[Reinforcing fibers contained in molded body region]

It is preferable that the first molded body region and the second molded body region contain reinforcing fiber bundle A having Li of 1 mm or more and 100 mm or less and $Li/(Ni \times Di^2)$ of $8.0 \times 10^1$ or more and $3.3 \times 10^3$ or less, in which Li is the fiber length of the reinforcing fiber bundle, Di is the single fiber diameter of the reinforcing fibers constituting the reinforcing fiber bundle, and Ni is the number of the single fibers contained in the reinforcing fiber bundle.

The volume fraction of the reinforcing fiber bundles A is preferably 50 vol% to 100 vol%, and more preferably 70 vol% to 90 vol% with respect to the total of reinforcing fibers contained in the molded body.

This application claims priority from Japanese Patent Application No. 2021-210611 filed on December 24, 2021.

**Claims**

**1.** A program for inspecting a molded body region, comprising:

generating a mechanical property inference model for inferring unknown mechanical property information of a fiber-reinforced second molded body region using non-destructive inspection information of the second molded body region as input by performing machine learning of known mechanical property information and known non-destructive inspection information of a fiber-reinforced first molded body region;
acquiring the non-destructive inspection information of the second molded body region;
inputting the acquired non-destructive inspection information into the mechanical property inference model, acquiring mechanical property information of the second molded body region from the mechanical property inference model, and performing output based on the mechanical property information,
wherein the first molded body region and the second molded body region are each obtained by molding a plate-shaped composite material with a mold,
the first molded body region and the second molded body region are obtained by molding the composite material such that a charge ratio is 10% or more and 500% or less, respectively,
wherein the charge ratio is a value obtained by calculating (S1/S2) × 100, wherein
S1 is a projected area of the composite material, and
S2 is a projected area of a portion corresponding to the first molded body region and the second molded body region in a mold cavity of the mold,
the non-destructive inspection information is vibration characteristic information or acoustic characteristic information, and a sampling frequency at the time of acquiring the non-destructive inspection information is more than 0 Hz.

2. The program for inspecting a molded body region according to claim 1, wherein
the first molded body region and the second molded body region are obtained by molding the composite material such that a charge ratio is 50% or more, respectively.

3. The program for inspecting a molded body region according to claim 1 or 2, wherein
the first molded body region and the second molded body region are fiber reinforced by discontinuous fibers, respectively.

4. The program for inspecting a molded body region according to any one of claims 1 to 3, wherein
the first molded body region and the second molded body region have isotropies of 1.5 or less, respectively.

5. The program for inspecting a molded body region according to any one of claims 1 to 4, wherein
coefficients of variation of basis weights of the first molded body region and the second molded body region are 10% or less, respectively.

6. The program for inspecting a molded body region according to any one of claims 1 to 5, wherein
the reinforcing fibers in each of the first molded body region and the second molded body region include reinforcing fiber bundles in which Li is 1 mm or more and 100 mm or less, and $Li/(Ni \times Di^2)$ is $8.0 \times 10^1$ or more and $3.3 \times 10^3$ or less, wherein Li is a length of the reinforcing fiber bundle, Di is a monofilament diameter of the reinforcing fibers constituting the reinforcing fiber bundle, and Ni is a number of monofilaments contained in the reinforcing fiber bundle.

7. The program for inspecting a molded body region according to any one of claims 1 to 6, wherein
the molding is press molding.

8. The program for inspecting a molded body region according to any one of claims 1 to 7, wherein
the composite material is a sheet molding compound in which a chopped fiber bundle mat is impregnated with a thermosetting resin as a matrix resin.

9. The program for inspecting a molded body region according to any one of claims 1 to 8, wherein
the non-destructive inspection information is image data or numerical data.

10. The program for inspecting a molded body region according to any one of claims 1 to 9, wherein
the mechanical property information is information on an elastic modulus or a fracture strength of the molded body region.

11. The program for inspecting a molded body region according to claim 10, wherein

the information on the elastic modulus includes an elastic modulus or a rank of the elastic modulus when the elastic modulus is ranked, and
the information on the fracture strength includes the fracture strength or a rank of the fracture strength when the fracture strength is ranked.

12. The program for inspecting a molded body region according to claim 11, wherein
the information on the elastic modulus or the fracture strength includes at least one of information indicating that the elastic modulus or the fracture strength is difficult to infer, information indicating that the elastic modulus or the fracture strength corresponds to a defective product, and information indicating that the elastic modulus or the fracture strength corresponds to a good product.

13. The program for inspecting a molded body region according to any one of claims 1 to 12, wherein
the mechanical property information or the non-destructive inspection information of the first molded body region includes at least one or more pieces of information obtained by a finite element method.

14. The program for inspecting a molded body region according to claim 9, wherein
the image includes a waveform of vibration damping.

15. The program for inspecting a molded body region according to any one of claims 1 to 14, wherein
the non-destructive inspection information is vibration characteristic information.

16. The program for inspecting a molded body region according to claim 15, wherein
the sampling frequency is 250 Hz or more and 50,000 Hz or less.

17. The program for inspecting a molded body region according to claim 15 or 16, wherein
natural frequencies of primary modes of the first molded body region and the second molded body region are more than 0 Hz and 1000 Hz or less.

18. The program for inspecting a molded body region according to any one of claims 1 to 14, wherein
the non-destructive inspection information is acoustic property information.

19. The program for inspecting a molded body region according to claim 18, wherein
natural frequencies of primary modes of the first molded body region and the second molded body region are more than 0 Hz and 20,000 Hz or less.

20. An inspecting method for a molded body region, comprising:

generating a mechanical property inference model for inferring unknown mechanical property information of a fiber-reinforced second molded body region using non-destructive inspection information of the second molded body region as input by performing machine learning of known mechanical property information and known non-destructive inspection information of a fiber-reinforced first molded body region;
acquiring the non-destructive inspection information of the second molded body region;
inputting the acquired non-destructive inspection information into the mechanical property inference model;
acquiring mechanical property information of the second molded body region from the mechanical property inference model; and performing output based on the mechanical property information,
wherein the first molded body region and the second molded body region are each obtained by molding a plate-shaped composite material with a mold,
the first molded body region and the second molded body region are obtained by molding the composite material such that a charge ratio is 10% or more and 500% or less, respectively,
wherein the charge ratio is a value obtained by calculating (S1/S2) $\times$ 100, wherein
S1 is a projected area of the composite material, and
S2 is a projected area of a portion corresponding to the first molded body region and the second molded body region in a mold cavity of the mold,
wherein the non-destructive inspection information is vibration characteristic information or acoustic characteristic information, and a sampling frequency at the time of acquiring the non-destructive inspection information is more than 0 Hz.

21. An inspection device for inspecting a molded body region, the device comprising a processor configured to access a model storage unit that stores a mechanical property inferring model generated by machine learning based on mechanical property information and non-destructive inspection information of a fiber-reinforced first molded body region,

wherein the mechanical property inference model infers unknown mechanical property information of a fiber-reinforced second molded body region by inputting non-destructive inspection information of the second molded body region,

wherein the first molded body region and the second molded body region are each obtained by molding a plate-shaped composite material with a mold,

the first molded body region and the second molded body region are obtained by molding the composite material such that a charge ratio is 10% or more and 500% or less, respectively,

wherein the charge ratio is a value obtained by calculating (S1/S2) × 100, wherein

S1 is a projected area of the composite material, and

S2 is a projected area of a portion corresponding to the first molded body region and the second molded body region in a mold cavity of the mold,

the processor is configured to:

acquire the non-destructive inspection information of the second molded body region;

input the non-destructive inspection information to the mechanical property inference model;

acquire mechanical property information of the second molded body region from the mechanical property inference model; and

output the mechanical property information based on the mechanical property information,

wherein the non-destructive inspection information is vibration characteristic information or acoustic characteristic information, and a sampling frequency at the time of acquiring the non-destructive inspection information is more than 0 Hz.

22. A program for inspecting a molded body region, the inspection program causing a processor to execute the steps of:

generating a mechanical property inference model for inferring unknown mechanical property information of a fiber-reinforced second molded body region using non-destructive inspection information of the second molded body region as input by performing machine learning of known mechanical property information and known non-destructive inspection information of a fiber-reinforced first molded body region;

acquiring the temperature distribution information of the second molded body region;

inputting the acquired temperature distribution information to the mechanical property inference model;

acquiring mechanical property information of the second molded body region from the mechanical property inference model; and

outputting the mechanical property information based on the mechanical property information,

wherein the first molded body region and the second molded body region are each obtained by molding a plate-shaped composite material with a mold,

wherein the first molded body region and the second molded body region are obtained by molding the composite material such that a charge ratio is 10% or more and 500% or less, respectively,

wherein the charge ratio is a value obtained by calculating (S1/S2) × 100, wherein

S1 is a projected area of the composite material, and

S2 is a projected area of a portion corresponding to the first molded body region and the second molded body region in a mold cavity of the mold.

23. The inspection program according to claim 22, wherein
the temperature distribution information is a temperature distribution image.

24. The inspection program according to claim 22, wherein
the temperature distribution information is an active thermographic image.

25. A recording medium storing an inspection program according to any one of claims 1 to 19, 22 to 24.

*FIG.1*

EP 4 455 658 A1

## *FIG.2*

```
      ( START )
          │
          ▼
┌─────────────────────────────────────────┐
│ ACQUIRE NON-DESTRUCTIVE INFORMATION      │ ～ S201
│ SAMPLES FROM PLURAL MOLDED BODY REGION   │
│ SAMPLES                                  │
└─────────────────────────────────────────┘
          │
          ▼
┌─────────────────────────────────────────┐
│ GENERATE SECOND INPUT DATA FROM EACH NON-│ ～ S202
│ DESTRUCTIVE INSPECTION INFORMATION SAMPLE│
└─────────────────────────────────────────┘
          │
          ▼
┌─────────────────────────────────────────┐
│ ACQUIRE MECHANICAL PROPERTY INFORMATION  │
│ SAMPLE OF EACH MOLDED BODY REGION SAMPLE │ ～ S203
│ AND ASSOCIATE WITH EACH SECOND INPUT DATA│
└─────────────────────────────────────────┘
          │
          ▼
┌─────────────────────────────────────────┐
│ START TRAINING OF NEURAL NETWORK         │ ～ S204
│ BASED ON SECOND INPUT DATA               │
└─────────────────────────────────────────┘
          │
          ▼
┌─────────────────────────────────────────┐
│ ADJUST VARIOUS PARAMETERS THROUGH        │ ～ S205
│ TRAINING                                 │
└─────────────────────────────────────────┘
          │
          ▼
      ( END )
```

# FIG.3

301

302

303

304

311

312

313

*FIG. 4*

(m-1)-th LAYER          m-th LAYER

## FIG.5

START

ACQUIRE NON-DESTRUCTIVE INSPECTION INFORMATION FROM MOLDED BODY REGION (a) — S501

GENERATE FIRST INPUT DATA FROM EACH NON-DESTRUCTIVE INSPECTION INFORMATION — S502

INPUT FIRST INPUT DATA TONEURAL NETWORK — S503

INFER MECHANICAL PROPERTY INFORMATION BASED ON REACTION VALUE OUTPUT LAYER OF NEURAL NETWORK — S504

END

## FIG.6

DISTRIBUTION OF IDENTIFICATION SURFACE AND REACTION
VALUE WHEN RBF IS USED AS ACTIVATION FUNCTION

## FIG.7

DISTRIBUTION OF IDENTIFICATION SURFACE AND
REACTION VALUE WHEN SIGMOID FUNCTION IS USED AS
ACTIVATION FUNCTION

## FIG.8A

## *FIG.8B*

←— 802

## *FIG.8C*

←— 803

## *FIG.8D*

←— 804

## FIG.9

## FIG.10

*FIG.11*

## FIG.12

Ms

20

M

## FIG.13

S2

30

SP

20

MD1

D2

D

D1

*FIG.14*

## FIG. 15

*FIG.16*

## FIG.17

## FIG.18A

## FIG.18B

**INTERNATIONAL SEARCH REPORT**

| International application No. |
|---|
| **PCT/JP2022/045549** |

**A.    CLASSIFICATION OF SUBJECT MATTER**

*G01N 29/12*(2006.01)i; *G01N 25/18*(2006.01)i; *G01N 29/04*(2006.01)i; *G01N 29/44*(2006.01)i
FI:    G01N29/12; G01N29/04; G01N29/44; G01N25/18 E

According to International Patent Classification (IPC) or to both national classification and IPC

**B.    FIELDS SEARCHED**

Minimum documentation searched (classification system followed by classification symbols)

G01N29/00-G01N29/52; G01N25/00-G01N25/72; G06N10/00-G06N99/00; G01B17/00-G01B17/08; B29C41/00-B29C41/36; B29C41/46-B29C41/52; B29C70/00-B29C70/88; C08J5/04-C08J5/10; C08J5/24; G01J5/00-G01J5/90; G01N3/00-G01N3/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); Scopus

**C.    DOCUMENTS CONSIDERED TO BE RELEVANT**

| Category* | Citation of document, with indication, where appropriate, of the relevant passages | Relevant to claim No. |
|---|---|---|
| X | MIURA, K et al., EXAMINATION OF LEARNING MODELS AND INFERENCE OF MANUFACTURING METHODS OF CFRP BY DEEP LEARNING USING THEIR ULTRASONIC IMAGES, SAMPE Europe Conference 2020 Amsterdam - Netherlands, 30 September 2020, pp. 1-9, https://www.nasampe.org/store/viewproduct.aspx?id=17891988 abstract, sections 2, 3, table 1, fig. 1-17 | 1-9, 14-21 |
| Y | | 10-13, 22-25 |
| Y | JP 2011-79989 A (MITSUBISHI RAYON CO., LTD.) 21 April 2011 (2011-04-21) paragraphs [0048]-[0053], tables 2, 3 | 10-13 |
| Y | JP 2019-527820 A (ILLINOIS TOOL WORKS INC.) 03 October 2019 (2019-10-03) paragraph [0004] | 22-25 |
| A | CN 112060627 A (WUHAN UNIVERSITY) 11 December 2020 (2020-12-11) entire text, all drawings | 1-25 |
| A | US 2020/0240139 A1 (SMITH, W. E.) 30 July 2020 (2020-07-30) entire text, all drawings | 1-25 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 February 2023** | **21 February 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

| International application No. |
| --- |
| **PCT/JP2022/045549** |

| Patent document cited in search report | | | Publication date (day/month/year) | Patent family member(s) | | | Publication date (day/month/year) |
| --- | --- | --- | --- | --- | --- | --- | --- |
| JP | 2011-79989 | A | 21 April 2011 | US | 2012/0283352 | A1 | |
| | | | | paragraphs [0080]-[0086], tables 2, 3 | | | |
| | | | | WO | 2011/043288 | A1 | |
| | | | | EP | 2487193 | A1 | |
| | | | | CA | 2774845 | A1 | |
| | | | | CN | 102639589 | A | |
| | | | | KR | 10-2012-0061939 | A | |
| | | | | RU | 2012112016 | A | |
| | | | | TW | 201129625 | A | |
| JP | 2019-527820 | A | 03 October 2019 | US | 2020/0182758 | A1 | |
| | | | | paragraph [0004] | | | |
| | | | | WO | 2018/002871 | A1 | |
| | | | | EP | 3479094 | A1 | |
| | | | | KR | 10-2019-0024986 | A | |
| | | | | CN | 109642862 | A | |
| CN | 112060627 | A | 11 December 2020 | (Family: none) | | | |
| US | 2020/0240139 | A1 | 30 July 2020 | WO | 2020/159833 | A1 | |
| | | | | CN | 113366179 | A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019158459 A
- WO 2019151393 A
- WO 2019151394 A
- JP 2021210611 A